# EUROPÄISCHE PATENTANMELDUNG

(11) **EP 4 122 849 A1**
(43) Veröffentlichungstag der Anmeldung: **25.01.2023**
(21) Anmeldenummer: 22178789.8
(22) Anmeldetag: 14.06.2022
(51) Int. Cl.: B65G 47/61

(54) **VERFAHREN UND VORRICHTUNG ZUM AUTOMATISCHEN ENTLADEN EINER HÄNGEND GEFÖRDERTEN TRANSPORTTASCHE SOWIE HÄNGEFÖRDERANLAGE MIT EINER DERARTIGEN VORRICHTUNG**

(30) Priorität: 23.07.2021 DE 102021207911
(71) Anmelder: Dürkopp Fördertechnik GmbH, 33719 Bielefeld (DE)
(72) Erfinder: Johannesmann, Thomas, 33719 Bielefeld (DE); Leßmann, Marcel, 33129 Delbrück (DE)
(74) Vertreter: Rau, Schneck & Hübner Patentanwälte Rechtsanwälte PartGmbB

(57) **Zusammenfassung**

Eine Vorrichtung zum automatischen Entladen einer hängend geförderten Transporttasche (7) umfasst eine Zuführstrecke (101) zum Zuführen der Transporttasche (7) in eine Entladeposition (102) und eine Entladeeinheit (105) zum automatischen Entladen der Transporttasche (7) in der Entladeposition (102).

## Beschreibung

Der Inhalt der deutschen Patentanmeldung DE 10 2021 207 911.3 wird durch Bezugnahme hierin aufgenommen.

Die Erfindung betrifft ein Verfahren und eine Vorrichtung zum automatischen Entladen einer hängend geförderten Transporttasche sowie eine Hängeförderanlage mit einer derartigen Vorrichtung.

DE 10 2018 209 266 A1 offenbart eine Hängeförderanlage, mit der Einzelwaren in Transporttaschen hängend gefördert werden. Die Transporttaschen werden mit den Einzelwaren beladen, sortiert, zu Aufträgen kommissioniert und an Packplätzen entladen. An den Packplätzen werden die Einzelwaren manuell in Versandbehälter verpackt und an einen Warenausgang übergeben. Um den Verpackungsvorgang zu vereinfachen, werden mehrere Einzelwaren gleichzeitig auftragsrein bereitgestellt.

Es ist die Aufgabe der vorliegenden Erfindung, das Entladen der Transporttaschen und insbesondere Folgeprozesse wie beispielsweise das anschließende Verpacken der Waren, zu vereinfachen und insbesondere effizienter zu gestalten.

Diese Aufgabe ist erfindungsgemäß gelöst durch ein Verfahren mit den im Anspruch 1 angegebenen Merkmalen, eine Vorrichtung mit den im Anspruch 5 angegebenen Merkmalen sowie durch eine Hängeförderanlage mit den im Anspruch 15 angegebenen Merkmalen.

Erfindungsgemäß wurde erkannt, dass eine Vorrichtung und ein Verfahren für hängend geförderte Transporttaschen es ermöglichen, das Entladen der Transporttaschen und ein Folgeprozess, insbesondere das Verpacken von in den Transporttaschen geförderten Artikeln, zu entkoppeln, insbesondere funktional zu entkoppeln. Als Folgeprozess kommen insbesondere alle Prozesse in Betracht, mit denen die in den Transporttaschen geförderten Artikel aus den Transporttaschen vereinzelt und/oder identifiziert übergeben werden, wobei insbesondere eine weitere, spätere Identifikation der Artikel entbehrlich ist. Denkbar ist auch, dass mehrere Artikel, insbesondere mehrere Artikel eines Auftrags, sogenannte Auftragswaren, insbesondere in einem Zwischenbehälter, gesammelt werden. Zwar kann in diesem Fall eine eindeutige Zuordnung der Artikel zu einer Identifikation zu einem späteren Zeitpunkt dann nicht mehr erfolgen. Insbesondere im Bereich von E-Commerce-Aufträgen ist eine eindeutige Zuordnung aber nicht erforderlich und insofern akzeptabel.

Die Vorrichtung wird auch als Entladestation bezeichnet und ermöglicht eine zusätzliche Automatisierung beim Kommissionieren von Artikeln zu Aufträgen. Die Transporttaschen werden, insbesondere vereinzelt, mittels einer Zuführstrecke in eine Entladeposition zugeführt und dort mittels einer Entladeeinheit automatisch entladen. An der Entladeposition kann die zu entladende Transporttasche mittels einer Stoppeinheit zuverlässig gestoppt werden. Die Zuverlässigkeit des Entladevorgangs ist dadurch erhöht. Es ist auch möglich, die Transporttaschen zu entladen, ohne die Förderung der Transporttaschen zu stoppen. Die Transporttaschen werden in diesem Fall quasi im Vorbeifahren an der Entladeposition entladen. Insbesondere erfolgen das Zuführen und/oder das Entladen der Transporttaschen jeweils automatisiert. Mittels der Entladeeinheit ist es möglich, die in den Transporttaschen transportierten Artikel automatisiert, sicher, zuverlässig und gezielt abzugeben, insbesondere an eine Verpackungseinheit, in der die Artikel versandfertig vorbereitet, also verpackt werden. Die Vorrichtung kann mehrere Zuführstrecken und/oder mehrere Entladepositionen aufweisen, wobei die Entladepositionen entlang der Förderrichtung der Transporttaschen parallel zueinander und/oder hintereinander angeordnet sein können. Es ist insbesondere möglich, die Transporttasche gezielt in eine der mehreren Entladepositionen zuzuführen und dort zu entladen. Der Durchsatz beim automatischen Entladen der Transporttaschen kann dadurch erhöht werden. Eine derartige Vorrichtung mit mehreren Entladepositionen weist insbesondere eine erhöhte Funktionalität auf uns kann insbesondere als Sorter dienen.

Insbesondere kann auf einen manuellen Eingriff beim Entladen der Transporttaschen und/oder beim Verpacken der Artikel in ein Verpackungsbehältnis verzichtet werden. Ein manueller Eingriff ist insbesondere entbehrlich. Es ist insbesondere möglich, die mittels der Transporttaschen zu Aufträgen kommissionierten Artikel automatisiert zu entladen und auftragsweise, insbesondere automatisiert zu verpacken.

Der Personalaufwand für die Abwicklung eines Kommissionierauftrags ist reduziert.

Ein automatisierter Verpackungsvorgang ist aber nicht zwingend. Es ist insbesondere auch denkbar, dass die abgegebenen Artikel beispielswiese in einem manuellen oder teil-manuellen Verpackungsschritt verpackt werden. Ein teil-manueller Verpackungsvorgang kann beispielsweise darin bestehen, dass ein Versandbehältnis automatisiert bereitgestellt wird, wobei das Schließen des Verpackungsbehältnisses und/oder das Anbringen von Versandetiketten und/oder das Abtransportieren eines Verpackungsbehältnisses zumindest teilweise manuell durchgeführt werden kann.

Das, insbesondere automatisierte, Verpacken kann mittels einer Verpackungseinheit erfolgen, wobei die Verpackungseinheit insbesondere einen Roboter, insbesondere einen Industrieroboter, aufweisen kann. Der Roboter kann voll automatisch die aus der Transporttasche abgegebenen Artikel an ein Verpackungsbehältnis gezielt abgeben und insbesondere das Verpackungsbehältnis automatisiert schließen und/oder weiterfördern, insbesondere zu einem Warenausgang.

Die Vorrichtung weist eine Zuführstrecke auf, mittels der die Transporttaschen in eine Entladeposition gefördert werden. Die Transporttaschen können in die Entladeposition insbesondere vereinzelt gefördert werden. So ist gewährleistet, dass sich immer nur genau eine, insbesondere zuvor identifizierte, Transporttasche in der Entladeposition befindet. Es ist gewährleistet, dass genau der Artikel entladen wird, der vorgesehen ist. Die Förderung der Transporttaschen entlang der Zuführstrecke erfolgt insbesondere mittels eines Hängeadapters. Der Hängeadapter weist insbesondere ein Kopplungselement auf, an dem die Transporttasche hängend gekoppelt werden kann. Ein derartiger Hängeadapter für eine Hängeförderanlage ist aus DE 10 2005 006 455 A1 bekannt. Bezüglich Details der Ausgestaltung des Hängeadapters und seiner Funktion zur Förderung entlang der Hängeförderanlage wird hierauf explizit verwiesen.

Die Entladestation kann eine Stoppeinheit aufweisen. Die Stoppeinheit gewährleistet, dass die zu entladende Transporttasche in der Entladeposition zuverlässig gestoppt wird. Das Abgeben des Artikels aus der Transporttasche ist zuverlässig möglich. Insbesondere erfolgt das Stoppen der Transporttasche bevor die Transporttasche mittels der Öffnungseinheit geöffnet wird.

Insbesondere weist die Vorrichtung eine Steuerungseinheit auf, um die Vorgänge an der Vorrichtung, insbesondere die Zuführstrecke und/oder die Entladeeinheit zu steuern. Dazu steht die Steuerungseinheit mit der Zuführstrecke und/oder der Entladeeinheit in Signalverbindung.

Eine wesentliche Erkenntnis der Erfindung beruht darauf, dass erfindungsgemäß eine sichere und zuverlässige Übergabe der aus den Transporttaschen abgegebenen Artikel an den Folgeprozess gewährleistet ist. Es wurde erkannt, dass Informationen, die für den Transport der Artikel in der Hängeförderanlage, insbesondere stromaufwärts der Entladestation ohnehin erfasst worden sind, insbesondere für die Festlegung des Förderpfades durch die Hängeförderanlage bei der Übergabe der Artikel an den Folgeprozess beibehalten werden können. Diese, insbesondere individualisierten und artikelbezogenen Informationen können für die Folgeprozesse genutzt werden. Das Verfahren ist effizient. Die Informationen sind insbesondere in der Steuerungseinheit hinterlegt und mit den Artikeln verknüpft. Dadurch, dass ein vollautomatisiertes Verfahren zur Handhabung der Artikel gewährleistet ist, können diese vorhandenen Informationen für die Folgeprozesse effizient genutzt werden. Es ist insbesondere nicht erforderlich, diese Informationen für Folgeprozesse noch einmal zu erfassen. Zusätzliche Identifikationsschritte, die bei einem manuellen Packen und/oder Kommissionieren erforderlich würden, sind entbehrlich. Das Verfahren ist robust, zuverlässig und effizient.

Insbesondere erfolgt die Übergabe der Artikel an den mindestens einen Folgeprozess automatisiert und insbesondere vollautomatisch. Manuelle Interaktionen sind entbehrlich.

Eine weitere Erkenntnis der Erfindung besteht darin, dass das Befüllen der Transporttaschen und mögliche Folgeprozesse, insbesondere das Verpacken der Artikel in Versandbehältnisse, funktionell voneinander entkoppelt sind. Insbesondere sind die Leistungen einer Beladeeinheit und/oder einer Entladeeinheit unabhängig voneinander. Insbesondere ist es möglich, mehrere Transporttaschen an der Entladeposition nacheinander zu entladen und die entladenen Artikel in dem Zwischenspeicher zwischen zu speichern und gesammelt aus dem Zwischenspeicher abzugeben. Ein unerwünschtes Aufstauen und damit verbundene Wartezeiten der Beladeeinheit und der Verpackungseinheit können vermieden werden. Die Gesamteffizienz der Anlage ist verbessert. Insbesondere kann die Auslastung der Verpackungseinheit gesteigert werden.

Das Verfahren weist eine erhöhte Zuverlässigkeit auf. Mittels des Zwischenspeichers ist garantiert, dass der aus der Transporttasche abgegebene Artikel zuverlässig vom Zwischenspeicher aufgenommen und aus dem Zwischenspeicher abgegeben wird, insbesondere an einen Folgeprozess und insbesondere an die Verpackungseinheit. Das Risiko, dass der Artikel in unbeabsichtigter Weise aus der Transporttasche abgegeben, aber nicht einem Verpackungsbehältnis zugeführt wird, ist reduziert und insbesondere ausgeschlossen. Eine Fehlbeladung des Verpackungsbehältnisses wird dadurch vermieden.

Es ist insbesondere möglich, in dem Zwischenspeicher mehrere Artikel, die jeweils aus verschiedenen Transporttaschen, insbesondere einzeln, abgegeben worden sind, zwischen zu speichern. Es ist insbesondere dadurch möglich, mehrere Artikel, insbesondere eines Auftrags, in dem Zwischenspeicher zu sammeln und gemeinsam an einen Folgeprozess, insbesondere an die Verpackungseinheit, zu übergeben.

Ein Verfahren gemäß Anspruch 2 weist eine erhöhte Zuverlässigkeit auf. Insbesondere kann der Artikel, der aus der Transporttasche abgegeben worden ist, gezielt an einen Folgeprozess und insbesondere in das Verpackungsbehältnis an der Verpackungseinheit abgegeben werden.

Ein Verfahren gemäß Anspruch 3 gewährleistet die erfolgreiche Abgabe des Artikels an einen Folgeprozess und insbesondere in das Versandbehältnis in der Verpackungseinheit. Das Risiko, dass eine unterbliebene Abgabe des Artikels in die Versandeinheit unentdeckt bleibt, ist ausgeschlossen. Eine unterbliebene Abgabe des Artikels in die Versandeinheit kann beispielswiese daraus resultieren, dass der Artikel in der Transporttasche nicht vorhanden ist. Dies kann beispielsweise durch eine fehlerhafte Beladung und/oder durch den Verlust des Artikels entlang der hängenden Förderung begründet sein. Eine unterbliebene Abgabe des Artikels in das Versandbehältnis kann auch durch einen fehlerhaften Entladevorgang hervorgerufen werden, wenn beispielsweise der Artikel an dem Zwischenspeicher vorbei abgegeben wird.

Ein Verfahren gemäß Anspruch 4 ist besonders effizient.

Eine Vorrichtung gemäß Anspruch 5 weist im Wesentlichen die Vorteile des Verfahrens gemäß Anspruch 1 auf, worauf hiermit verwiesen wird.

Eine Vorrichtung gemäß Anspruch 6 gewährleistet eine zuverlässige Zuführung der Transporttaschen in die Entladeposition. Ein Förderantrieb der Zuführstrecke wirkt insbesondere mit den Hängeadaptern zusammen, die entlang der Zuführstrecke gefördert werden. An jedem Hängeadapter wird jeweils eine Transporttasche gefördert. Der Förderantrieb ist insbesondere derart gesteuert, dass er die Förderbewegung stoppt, wenn sich die Transporttasche bzw. der Hängeadapter an der Entladeposition befindet.

Alternativ ist es möglich, die Zuführstrecke als zu der Entladeposition hin geneigte oder gekrümmte Förderschiene auszuführen, entlang der der Hängeadapter schwerkraftbedingt, also selbsttätig, in die Entladeposition gelangt. An der Entladeposition kann ein Stopperelement angeordnet sein, das ein Stoppen der Transporttasche in der Entladeposition gewährleistet.

Eine Identifikationseinheit gemäß Anspruch 7 erhöht die Zuverlässigkeit beim automatisierten Entladen. Die zu entladende Transporttasche und insbesondere der mit der Transporttasche transportierte Artikel werden eindeutig identifiziert. Dadurch ist sichergestellt, dass ausschließlich gewünschte Artikel an die Verpackungseinheit abgegeben werden. Die Identifikationseinheit ist insbesondere im Bereich der Entladeposition, insbesondere im Bereich der Zuführstrecke angeordnet. Die Identifikationseinheit ist insbesondere derart angeordnet, dass eine Identifikation der Transporttasche und/oder des Hängeadapters in der Entladeposition zuverlässig gewährleistet ist. Die Identifikationseinheit ist insbesondere derart angeordnet, dass eine in der Entladeposition befindliche Transporttasche eindeutig identifiziert werden kann. Dazu kann die Identifikationseinheit mit einem seitlichen Abstand zu der Entladestation, insbesondere der Zuführstrecke, und insbesondere in einer Vertikalposition angeordnet sein, in der sich ein Händeadapter in der Entladeposition befindet. Insbesondere ist eine kontaktlose Kommunikation zwischen der Identifikationseinheit und dem Hängeadapter der Transporttasche in der Entladeposition sichergestellt. Die Identifikationseinheit ist insbesondere als Transponderleser ausgeführt und kann insbesondere mit einem RFID-Chip kontaktlos kommunizieren. Ein derartiger RFID-Chip dient insbesondere zur eindeutigen Identifizierung der Transporttasche. Der RFID-Chip ist insbesondere an dem Hängeadapter angeordnet oder in dem Hängeadapter integriert, mittels dem die Transporttasche hängend gefördert wird.

Eine Vorrichtung gemäß Anspruch 8 vereinfacht das automatisierte Entladen durch Öffnen der Transporttaschen. Die Vorrichtung weist eine Öffnungseinheit auf, um die sich jeweils in der Entladeposition befindliche Transporttasche zu öffnen. Insbesondere ermöglicht die Öffnungseinheit ein automatisiertes Öffnen der Transporttasche. Mittels der Vorrichtung ist ein vollautomatisiertes Zuführen und Entladen der Transporttaschen sowie Verpacken der aus den Transporttaschen abgegebenen Artikel garantiert. Eine Auslösemechanik, die insbesondere im Bereich der Zuführstrecke angeordnet und insbesondere unmittelbar an der Zuführstrecke angeordnet ist, wirkt insbesondere mit einer Öffnungsmechanik der Transporttasche zusammen. Die Transporttasche kann dadurch geöffnet werden. Insbesondere kann die Transporttasche derart geöffnet werden, dass sie eine untere Entladeöffnung bildet, durch die der in der Transporttasche transportierte Artikel automatisch, insbesondere schwerkraftbedingt, entladen werden kann. Der Artikel fällt insbesondere infolge seines Eigengewichts durch die gebildete, untere Entladeöffnung selbsttätig aus der Transporttasche heraus.

Beispielsweise weist eine derartige Transporttasche eine in Förderrichtung der Transporttasche vordere Seitenwand und eine der vorderen Seitenwand gegenüberliegende hintere Seitenwand auf. Die beiden Seitenwände weisen jeweils an ihrem unteren Ende Schließleisten auf, wobei die Schließleisten lösbar miteinander koppelbar sind. Im Transportzustand der Transporttasche sind die Schließleisten miteinander gekoppelt. Die untere Entladeöffnung ist in dem Transportzustand geschlossen. Beim automatisierten Öffnen werden die beiden unteren Schließleisten entkoppelt, also voneinander beabstandet. Durch das Beabstanden der Schließleisten voneinander wird die untere Entladeöffnung gebildet.

Um die Schließleisten zu entkoppeln, ist die Öffnungsmechanik der Transporttasche vorgesehen. Die Öffnungsmechanik ermöglicht eine flexible Kraftübertragung von der Auslösemechanik der Öffnungseinheit auf die gekoppelten Schließleisten. Insbesondere weist die Öffnungsmechanik ein flexibles Kraftübertragungselement auf. Das flexible Kraftübertragungselement ermöglicht die Kraftübertragung, die für das Entkoppeln der Schließleisten am unteren Ende der Transporttasche erforderlich ist, insbesondere von einem oberen Bereich der Transporttasche, der der Zuführstrecke zugewandt und insbesondere benachbart zu der Zuführstrecke angeordnet ist, zu einem unteren Bereich der Transporttasche, der der Zuführstrecke abgewandt angeordnet ist.

Eine derartige Transporttasche mit Öffnungsmechanik, insbesondere mit einem flexiblen Kraftübertragungselement, ist aus DE 10 2018 201 676 A1 bekannt. Bezüglich konstruktiver Details und Funktionsweise dieser Transporttasche wird ausdrücklich hierauf verwiesen.

Alternativ kann das Entladen der Transporttasche auch dadurch erfolgen, dass die an den Hängeadapter hängend geförderte Transporttasche geschwenkt und/oder gekippt wird. Der in der Transporttasche befindliche Artikel kann über eine ohnehin an der Transporttasche befindliche Öffnung schwerkraftbedingt abgegeben, also ausgekippt werden. Eine derartige Öffnung kann an der Transporttasche oben, also dem Hängeadapter zugewandt, angeordnet sein. Wenn ein Auskippen des Artikels über diese obere Öffnung erfolgen soll, die auch als Beladeöffnung genutzt werden kann, wird die Transporttasche um eine, insbesondere horizontal und insbesondere senkrecht zu einer Förderrichtung der Transporttaschen orientierte Schwenkachse geschwenkt. Die Förderrichtung der Transporttaschen ist insbesondere durch die Zuführstrecke definiert. Insbesondere weist die Entladeeinheit in diesem Fall ein Stellelement auf, das insbesondere vertikal beabstandet unterhalb der Zuführstrecke angeordnet ist und ein automatisiertes Kippen der Transporttasche ermöglicht. Insbesondere steht das Stellelement mit der Steuerungseinheit in bidirektionaler Signalverbindung. Wenn das Entladen der Transporttasche durch Auskippen erfolgt, ist es vorteilhaft, wenn die Transporttasche dazu in der Entladeposition gestoppt wird. Es ist aber auch denkbar, das Auskippen im Vorbeifahren zu realisieren.

Das Stellelement kann an der Entladeposition auch derart angeordnet sein, dass die Transporttasche bezüglich der Förderrichtung in der Entladeposition seitlich gekippt wird. Die Schwenkachse ist in diesem Fall insbesondere parallel zur Förderrichtung orientiert.

Insbesondere erfolgt ein Schwenken der Transporttasche gegenüber dem Hängeadapter.

Eine Vorrichtung gemäß Anspruch 9 ermöglicht eine erhöhte Zuverlässigkeit bei der automatisierten Abgabe eines Artikels aus einer Transporttasche in der Entladeposition. Der Zwischenspeicher dient zum Aufnehmen eines aus der Transporttasche abgegebenen Artikels. Der Zwischenspeicher dient weiterhin zum Abgeben des Artikels an eine Verpackungseinheit, die zum, insbesondere automatisierten, Verpacken des Artikels dient. Insbesondere können von dem Zwischenspeicher nacheinander jeweils ein Artikel an die Verpackungseinheit abgegeben werden. In einem Verpackungsbehältnis, das in der Verpackungseinheit insbesondere automatisiert, geschlossen und versandfertig abgearbeitet wird, können mehrere Artikel angeordnet sein, insbesondere mehrere Artikel eines Auftrags. Mit dem Zwischenspeicher wird die Möglichkeit geschaffen, den automatisierten Warenfluss in der Hängeförderanlage bis zum Verpacken der Artikel automatisiert durchzuführen. Mit dem Zwischenspeicher wird die Voraussetzung für einen nachfolgenden, insbesondere automatisierten, Verpackungsschritt geschaffen. Ein manueller Verpackungsvorgang ist entbehrlich. Der Zwischenspeicher dient insbesondere zum Aufnehmen, Zwischenspeichern und/oder Abgeben genau eines Artikels. Dadurch sind das Entladen der Transporttaschen und das Abgeben des Artikels in die Verpackungseinheit zuverlässig möglich.

Eine Vorrichtung gemäß Anspruch 10 gewährleistet ein zuverlässiges Zwischenspeichern des abgegebenen Artikels in dem Zwischenspeicher. Die Entkopplung der Taschenzuführung von der nachfolgenden Verpackung ist sichergestellt. Der Zwischenspeicher ist insbesondere schachtartig oder rohrartig ausgeführt und insbesondere vertikal orientiert. Die automatische, schwerkraftbedingte Förderung des Artikels durch den Zwischenspeicher ist dadurch vereinfacht. Der Zwischenspeicher weist insbesondere eine Längsachse auf, die gegenüber der Horizontalen geneigt ist. Ein Neigungswinkel der Längsachse des Zwischenspeichers beträgt insbesondere mindestens 45°, insbesondere mindestens 60°, insbesondere mindestens 75°, insbesondere mindestens 80°, insbesondere mindestens 85° und insbesondere 90°. Es ist möglich, dass die Längsachse des Zwischenspeichers zumindest abschnittsweise nicht linear und insbesondere gekrümmt ausgeführt ist. Die Zuförderung des Artikels aus dem Zwischenspeicher in die Verpackungseinheit ist verbessert. Vorteilhaft ist es, wenn der Zwischenspeicher an seinem oberen, der in der Entladeposition angeordneten Transporttasche zugewandten Ende einen Eingangstrichter aufweist. Die Abgabe des Artikels in den Zwischenspeicher ist zuverlässig möglich.

Ein Halteelement des Zwischenspeichers ist insbesondere als Platte oder formstabiles Gitter, insbesondere aus sich kreuzenden Stäben oder Stangen ausgeführt. Das Halteelement ist insbesondere als Schwenkklappe ausgeführt, die um eine Schwenkachse schwenkbar ist. Das Halteelement kann auch durch mehrere, insbesondere parallel zueinander angeordnete, Stangen oder Stäbe ausgeführt sein. Es ist auch denkbar, dass das Halteelement als flexibles Netz oder Gewebe ausgeführt ist. Das Halteelement ist insbesondere entlang der Längsachse des Zwischenspeichers, also insbesondere innerhalb des Schachtes oder des Rohres angeordnet.

Ein verlagerbares Halteelement vereinfacht den automatisierten Ablauf des Zwischenspeicherns. In einer Halteposition ist das Halteelement derart angeordnet, dass der Artikel in dem Zwischenspeicher gehalten ist. In einer Freigabeposition ist das Halteelement derart angeordnet, dass der Artikel zur Weiterförderung, insbesondere an die Verpackungseinheit, freigegeben ist.

Vorteilhaft ist es, wenn das Halteelement zwischen der Halteposition und der Freigabeposition schaltbar ausgeführt ist. Für das schaltbare Verlagern des Halteelements ist ein Verlagerungsantrieb vorgesehen, insbesondere ein Pneumatikzylinder. Der Verlagerungsantrieb ist insbesondere ein lineares Stellelement. Der Verlagerungsantrieb kann auch als Hydraulikzylinder oder als elektrischer Spindeltrieb ausgeführt sein. Der Verlagerungsantrieb kann auch als ein um eine Schwenkachse schwenkbarer Drehantrieb ausgeführt sein.

Ein Zwischenspeicher gemäß Anspruch 11 gewährleistet die zuverlässige Abgabe der entladenen Artikel an die Verpackungseinheit. Dazu weist der Zwischenspeicher ein Zugangs-Sensorelement auf, das den Zugang des Artikels in den Zwischenspeicher quittiert. Zusätzlich oder alternativ weist der Zwischenspeicher ein Abgangs-Sensorelement auf, das den Abgang des Artikels aus dem Zwischenspeicher, insbesondere in die Verpackungseinheit, quittiert. Es ist grundsätzlich auch denkbar, dass der Zwischenspeicher nur ein einziges Sensorelement aufweist, das den Zugang und/oder den Abgang des Artikels quittiert. Das Zugangs-Sensorelement und/oder das Abgangs-Sensorelement sind insbesondere als berührungsloser Sensor ausgeführt, insbesondere als Lichtschranke oder Lichtgitter, die insbesondere in einer Ebene senkrecht zur Längsachse des Zwischenspeichers orientiert sind. Wenn der Artikel in den Zwischenspeicher zugeht oder aus dem Zwischenspeicher abgeht, wird dies von dem jeweiligen Sensorelement erfasst.

Insbesondere stehen die Sensorelemente mit der Steuerungseinheit in Signalverbindung. Die Steuerungselemente sind derart ausgeführt, dass sie ein Quittierungssignal an die Steuerungseinheit übermitteln.

Eine Anordnung des Zwischenspeichers gemäß Anspruch 12 vereinfacht die selbsttätige, insbesondere schwerkraftbedingte Abgabe des Artikels aus dem Zwischenspeicher an die Verpackungseinheit. Dadurch, dass der Zwischenspeicher in vertikaler Richtung zwischen der zu entleerenden Transporttasche und der Verpackungseinheit angeordnet ist, ist die Fallhöhe für die zu entladenden Artikel und damit das Risiko einer mechanischen Beeinträchtigung reduziert.

Ein Taschen-Stabilisierungselement gemäß Anspruch 13 gewährleistet eine zuverlässige und stabilisierte Anordnung der Transporttasche in der Entladeposition. Das Risiko eines unbeabsichtigten Pendelns der Transporttasche relativ zu dem Hängeadapter wird dadurch reduziert und insbesondere verhindert. Das Taschen-Stabilisierungselement ist insbesondere als mechanisches Anschlagelement, insbesondere als Leiste ausgeführt. Das Taschen-Stabilisierungselement dient insbesondere als Anschlagelement für die Transporttasche, insbesondere in einem unteren Bereich der Transporttasche, der der Zuführstrecke abgewandt ist. Insbesondere ermöglicht das Taschen-Stabilisierungselement ein definiertes Anliegen der Transporttasche mit den unteren Schließleisten. Das Taschen-Stabilisierungselement ist insbesondere vertikal beabstandet und insbesondere unterhalb der Zuführstrecke angeordnet. Vorteilhaft ist es, wenn das Taschen-Stabilisierungselement mittels eines Schaltaktors zwischen einer Stabilisierungsposition und einer Förderposition schaltbar verlagerbar ist. Der Schaltaktor ist insbesondere entsprechend dem Verlagerungsantrieb für das Halteelement ausgeführt. In der Stabilisierungsposition kann die Transporttasche an dem Taschen-Stabilisierungselement stabilisierend anliegen. In der Förderposition ist die Tasche für eine weitere Förderung aus der Entladeposition heraus freigegeben und kann ungehindert daran vorbei gefördert werden.

Eine Vorrichtung gemäß Anspruch 14 weist eine erhöhte Funktionalität auf. Die Verpackungseinheit ermöglicht das, insbesondere automatische, Verpacken des Artikels in einem Verpackungsbehältnis. Das Verpackungsbehältnis kann eine formflexible Tüte oder ein Beutel sein. Das Verpackungsbehältnis wird in diesem Fall, insbesondere als Rollenmaterial bereitgestellt, von der Verpackungseinheit automatisiert geöffnet, insbesondere aufgeblasen, in dem geöffneten Zustand gehalten und nach Zugeben des Artikels automatisch geschlossen, insbesondere verklebt.

Alternativ kann das Verpackungsbehältnis ein Verpackungskarton sein, der insbesondere kubisch ausgeführt ist und an fünf Seitenflächen verschlossen ist. Die sechste Seitenfläche, die insbesondere oben und insbesondere unterhalb des Zwischenspeichers angeordnet ist, dient als Öffnung für die Zuführung des Artikels aus dem Zwischenspeicher. Die obere Seitenwand kann durch einen geeigneten Aktor der Verpackungseinheit umgelegt und insbesondere durch Kleben, verschlossen werden.

Es ist auch denkbar, dass mehrere Artikel in ein und dasselbe Verpackungsbehältnis abgegeben werden. Wesentlich ist, dass die Abgabe der Artikel aus den Transporttaschen einzeln separat erfolgt, also sukzessive nacheinander. Insbesondere wird immer nur genau ein Artikel von einer Transporttasche in den Zwischenspeicher abgegeben und von dem Zwischenspeicher an die Verpackungseinheit weitergefördert.

Vorteilhaft ist es, wenn die Verpackungseinheit ein Bereitstellungselement für das Verpackungsbehältnis aufweist. Mittels dem Bereitstellungselement kann das Verpackungsbehältnis, insbesondere in einer geöffneten Anordnung, zur Aufnahme des Artikels aus der Entladestation, insbesondere aus dem Zwischenspeicher, bereitgestellt werden. Das Bereitstellungselement ist insbesondere als Schwenkklappe ausgeführt, die zwischen einer Bereitstellungsposition und einer Abgabeposition schaltbar ausgeführt ist. Dazu ist das Bereitstellungselement insbesondere mit der Steuerungseinheit in Signalverbindung. In der Bereitstellungsposition ist die Schwenkklappe insbesondere im Wesentlichen horizontal orientiert und ermöglicht eine im Wesentlichen horizontale Anordnung des Verpackungsbehältnisses, insbesondere mit einer in vertikaler Richtung oben angeordneten Öffnung, über die der Artikel in das Verpackungsbehältnis abgegeben werden kann. In der Abgabeposition ist das Bereitstellungselement um die, insbesondere horizontal orientierte, Schwenkachse um einen Abgabewinkel derart geschwenkt, dass das Verpackungsbehältnis insbesondere selbsttätig von dem Bereitstellungselement infolge der Schwerkraft abgefördert wird, insbesondere auf eine Abführstrecke. Insbesondere ist das als Schwenkklappe ausgeführte Bereitstellungselement in der Abgabeposition vertikal orientiert oder mit einem Neigungswinkel gegenüber der Vertikalen angeordnet, wobei der Neigungswinkel höchstens 45°, insbesondere höchstens 30°, insbesondere höchstens 15° und insbesondere höchstens 10° beträgt. Vorteilhaft ist es, wenn der Neigungswinkel in der Abgabeposition maximal so groß ist, dass das Verpackungsbehältnis infolge seiner Schwerkraft die Haftreibung überwindet und selbsttätig abrutschen kann. Dabei kann der Neigungswinkel in Abhängigkeit der Reibbedingungen zwischen Verpackungsbehältnis und Bereitstellungselement entsprechend festgelegt werden.

Zusätzlich kann die Verpackungseinheit einen Auswerfer aufweisen, um das Abgeben des Verpackungsbehältnisses von dem Bereitstellungselement zuverlässig zu gewährleisten. Der Auswerfer ist insbesondere ein Linearaktor, der das Verpackungsbehältnis, nachdem es den und/oder die Artikel des Auftrags aufgenommen hat, aktiv von dem Bereitstellungselement entfernt und insbesondere zu der Abführstrecke befördert.

Vorteilhaft ist es, wenn das Verpackungsbehältnis, nachdem es in der Verpackungseinheit verschlossen worden ist, unmittelbar mit einem Versandetikett versehen wird, das insbesondere unmittelbar an dem Verpackungsbehältnis, insbesondere durch Kleben, befestigt wird. Das Versandetikett enthält Versandinformationen des Empfängers, insbesondere die Empfängeradresse.

Die Abführstrecke ermöglicht ein automatisches Abführen des in dem Verpackungsbehältnis angeordneten Artikels, insbesondere weg von der Verpackungseinheit, insbesondere hin zu einem Warenausgang. Die Abführstrecke ist insbesondere als Förderband ausgeführt. Es sind auch andere Ausgestaltungen, insbesondere autonome Fahrzeuge oder ein Rollenförderer möglich.

Eine Hängeförderanlage gemäß Anspruch 15 weist im Wesentlichen die Vorteile der Vorrichtung auf, worauf hiermit verwiesen wird. Zusätzlich kann die Hängeförderanlage einen Wareneingang zum Zuführen von Artikeln in die Hängeförderanlage, ein Warenlager zum Einlagern der zugeführten Artikel, eine Beladestation zum Beladen leerer Transporttaschen mit jeweils einem Artikel, eine Hängefördertechnik zum hängenden Fördern der Transporttaschen, einen Taschen-Zwischenspeicher zum Zwischenspeichern der Transporttaschen in der Hängeförderanlage, einen Taschensorter zum Sortieren der Transporttaschen, also zum Verändern der Reihenfolge der Transporttaschen entlang der Fördertechnik der Hängeförderanlage, aufweisen.

Sowohl die in den Patentansprüchen angebenden Merkmale als auch die in den nachfolgenden Ausführungsbeispielen einer erfindungsgemäßen Vorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Ansicht einer Hängeförderanlage,
- Fig. 2: eine vergrößerte, teilgeschnittene Ansicht einer Hängefördertechnik der Hängeförderanlage,
- Fig. 3: eine perspektivische Darstellung einer mit einem Artikel beladenen Transporttasche,
- Fig. 4: eine schematisierte Seitenansicht einer erfindungsgemäßen Vorrichtung der Hängeförderanlage gemäß Fig. 1 gemäß einem ersten Ausführungsbeispiel in einem Zustand, in dem die zu entladene Transporttasche sich stromaufwärts der Entladeposition befindet,
- Fig. 5: eine Fig. 4 entsprechende Ansicht mit der Transporttasche in der Entladeposition,
- Fig. 6: eine Fig. 4 entsprechende Darstellung mit geöffneter Transporttasche,
- Fig. 7: eine Fig. 4 entsprechende Darstellung, wobei der aus der Transporttasche abgegebene Artikel in einem Zwischenspeicher gehalten ist,
- Fig. 8: eine Fig. 4 entsprechende Darstellung, wobei der Artikel aus dem Zwischenspeicher in die Verpackungseinheit abgegeben wird,
- Fig. 9: eine Fig. 4 entsprechende Darstellung, wobei die entladene Transporttasche aus der Entladeposition abgeführt worden ist,
- Fig. 10: eine Fig. 5 entsprechende Darstellung einer Vorrichtung gemäß einem zweiten Ausführungsbeispiel, wonach die Transporttasche durch Auskippen entleert wird.

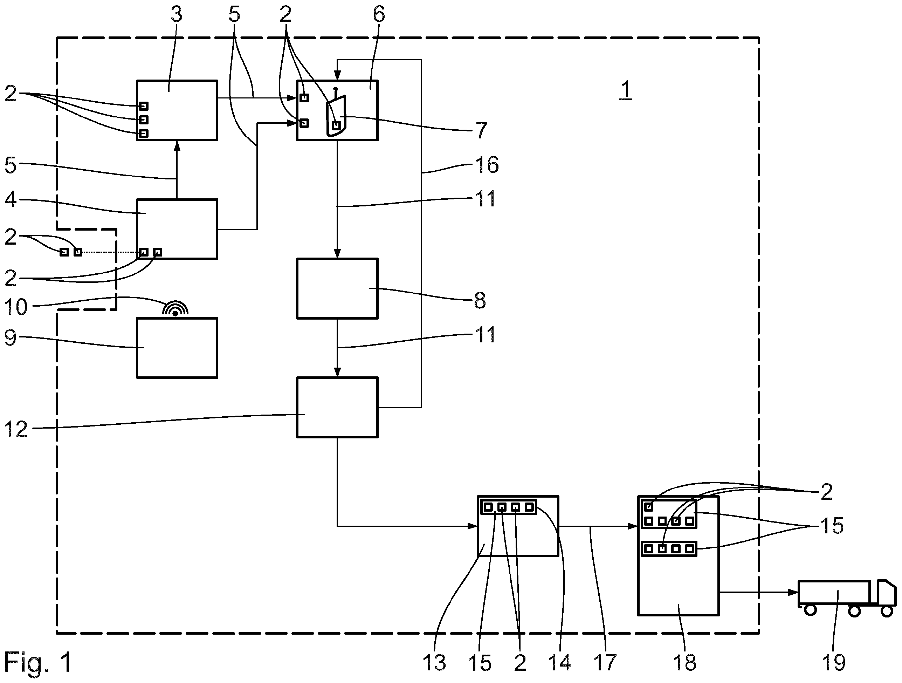

Eine in Fig. 1 als Ganzes mit 1 gekennzeichnete Anlage dient zum Fördern und/oder Transportieren von Einzelwaren 2. Die Anlage 1 ist eine Hängeförderanlage. Die Einzelwaren 2 werden auch als Artikel bezeichnet. Die Anlage 1 umfasst ein Warenlager 3, in dem die Einzelwaren 2 eingelagert sind. Das Warenlager 3 kann als manuelles Lager oder als automatisches Lager ausgeführt sein. Die Anlage 1 weist ferner einen Wareneingang 4 auf, über den Einzelwaren 2 der Anlage 1, insbesondere von extern, zugeführt werden. Dem Wareneingang 4 können auch Retourenwaren zugeführt werden.

Der Wareneingang 4 ist mittels einer Fördertechnik 5 mit dem Warenlager 3 verbunden. Die Fördertechnik 5 ist beispielsweise ein Förderband oder eine manuelle Zubringung der Einzelwaren 2, die insbesondere auch in Gebinden im Wareneingang 4 vorliegen können, zu dem Warenlager 3.

Die Anlage 1 umfasst ferner eine Aufgabestation 6, an der die Einzelwaren in eine Tragevorrichtung 7, die als Transporttasche ausgeführt ist, aufgegeben werden. Die Aufgabestation 6 wird auch als Beladestation bezeichnet, da die Transporttaschen 7 jeweils mit einem Artikel 2 beladen werden. Die Aufgabestation 6 ist sowohl mit dem Wareneingang 4 als auch mit dem Warenlager 3 jeweils unabhängig mit einer Fördertechnik 5 verbunden. Mittels der Fördertechnik 5 werden die Einzelwaren 2 von dem Warenlager 3 und/oder dem Wareneingang 4 zur Aufgabestation gefördert.

Es ist auch eine Ausführung der Anlage 1 ohne Fördertechnik zwischen der Aufgabestation 6 und dem Wareneingang 4 bzw. dem Warenlager 3 möglich. In diesem Fall werden die Einzelwaren 2 von dem Wareneingang 4 und/oder dem Warenlager 3 manuell zu der Aufgabestation 6, insbesondere mittels Federbodenwagen oder Palettenhubwagen gefördert.

Die Tragevorrichtungen 7 können jeweils vereinzelt mittels eines in Fig. 1 nicht näher dargestellten Rolladapters in einem Schienensystem geführt transportiert werden. Der Rolladapter wird auch als Hängeadapter bezeichnet. Die Tragevorrichtungen 7 werden hängend gefördert. Die Anlage 1 ist eine Hängeförderanlage. Vorteilhaft ist es, wenn die Tragevorrichtungen 7 jeweils mittels einer Identifikationseinrichtung eindeutig identifizierbar sind. Dazu kann jeweils der Rolladapter einen integrierten RFID-Chip aufweisen, auf dem Identifikationsdaten gespeichert sind. Die Identifikationsdaten können mit geeigneten Leseeinrichtungen, die insbesondere entlang des Transportweges der Hängeförderanlage 1 angeordnet sind, erfasst werden, um den Förderweg der Tragevorrichtungen 7 entlang der Hängeförderanlage 1 nachzuverfolgen und zu steuern.

Zur hängenden Förderung in der Hängeförderanlage 1 sind die Tragevorrichtungen 7 jeweils mit einem Rolladapter formschlüssig verbunden. Insbesondere weisen die Tragevorrichtungen 7 jeweils einen Haken auf, der in eine entsprechende Ausnehmung des Rolladapters einhängbar ist. An der Ausnehmung des Rolladapters kann auch ein Kleiderbügel mit einem daran hängenden Kleidungsstück eingehängt werden. Insbesondere dient jede Tragevorrichtung 7 für die Förderung genau einer Einzelware 2.

Alternativ kann auch der Rolladapter hakenförmig ausgeführt sein und in eine Ausnehmung der Tragevorrichtung 7 eingehängt werden.

Die Hängeförderanlage 1 umfasst eine Sortiereinheit 8, die zum Sortieren der Tragevorrichtungen 7, also zum Verändern der Reihenfolge der Einzelwaren im Warenstrom, dient. Die Sortiereinheit 8 kann verschiedentlich ausgeführt sein. Die Sortiereinheit 8 wird auch als Taschen-Sorter bezeichnet. Die Sortiereinheit 8 kann mehrere parallel und/oder in Reihe angeordnete Staustrecken und/oder einen oder mehrere Umlaufkreisel aufweisen. Zusätzlich oder alternativ kann die Sortiereinheit 8 als Matrixsorter ausgeführt sein.

Die Sortiereinheit 8 dient insbesondere zum Zusammenstellen der Einzelwaren 2 zu logischen Gruppen. Insbesondere werden die Einzelwaren 2 zu Gruppen von Einzelwaren 2 zusammengefasst, die einen Auftrag 15 bilden. In der Sortiereinheit 8 können auch Gruppen von Einzelwaren 2 gebildet werden, die Teil eines Auftrags 15 sind.

Die Hängeförderanlage 1 umfasst eine zentrale Steuereinheit 9, die signaltechnisch insbesondere mit den Leseeinrichtungen entlang der Hängeförderanlage 1 in Signalverbindung steht. Die Signalverbindung kann kabelgebunden oder kabellos erfolgen. Eine kabellose, funkgebundene Signalverbindung ist in Fig. 1 mit einem Symbol 10 zur Funkübertragung dargestellt.

Die Hängeförderanlage 1 umfasst ein Schienensystem 11, mittels dem die Tragevorrichtungen 7 von der Aufgabestation 6 zu der Sortiereinheit 8 und durch die Sortiereinheit 8 gefördert werden. Das Schienensystem 11 dient auch zur fördertechnischen Verbindung der Sortiereinheit 8 mit mindestens einer Vorrichtung, die auch als Entladestation 12 bezeichnet wird.

Insbesondere sind mehrere Entladestationen 12 vorgesehen. An der Entladestation 12 werden die Tragevorrichtungen 7 automatisch geöffnet und entladen, insbesondere indem die Einzelware 2 aus der geöffneten Tragevorrichtung 7 schwerkraftbedingt nach unten herausfällt. Zum automatischen Öffnen der Tragevorrichtungen 7 in der Entladestation 12 dient eine nicht näher dargestellte Öffnungseinheit. Die Öffnungseinheit stellt eine Entladeeinheit dar.

Alternativ zu der Öffnungseinheit kann die Entladestation 12 auch ein nicht näher dargestelltes Stellelement aufweisen, um die Transporttasche 7 in der Entladeposition um eine, insbesondere horizontal und insbesondere senkrecht zur Förderrichtung der Transporttasche 7 orientierte Schwenkachse oder um eine, insbesondere parallel zur Förderrichtung der Transporttasche 7 orientierte Schwenkachse seitlich zu schwenken und dadurch den Artikel 2 aus der Transporttasche 7 auszukippen.

Wesentlich ist, dass die Entladestation 12 ein automatisches Entladen der Transporttaschen 7 ermöglicht.

Die an der Entladestation 12 entladenen Artikel 2 werden an eine automatische Verpackungseinheit 13 abgegeben und, insbesondere automatisch, in einem Verpackungsbehältnis 14 verpackt.

Die in der Entladestation 12 entleerten Tragevorrichtungen 7 werden über eine Rückführstrecke 16 der Hängeförderanlage 1 zurückgeführt, mittels einer nicht dargestellten Schließeinheit geschlossen, also in ihren Ursprungszustand zurückversetzt, und beispielsweise an der Aufgabestation 6 als Leertaschen zum Beladen mit Einzelwaren 2 wieder zur Verfügung gestellt.

Mit der Verpackungseinheit 13 ist fördertechnisch eine Abführstrecke 17 verbunden, die die Verpackungseinheit 13 mit einem Warenausgang 18 verbindet. Über den Warenausgang 18 können die Aufträge 15 mit den Einzelwaren 2 die Anlage 1 verlassen. Die in der Anlage 1 abgearbeiteten Aufträge 15 können unterschiedliche Artikel und unterschiedliche Anzahlen der Artikel aufweisen. Es ist auch denkbar, dass ein Auftrag 15 nur eine einzige Einzelware 2 aufweist. Aufträge 15 aus dem Warenausgang 16 können mittels externer Transportmittel 19 wie beispielsweise Lastkraftwagen, abtransportiert werden.

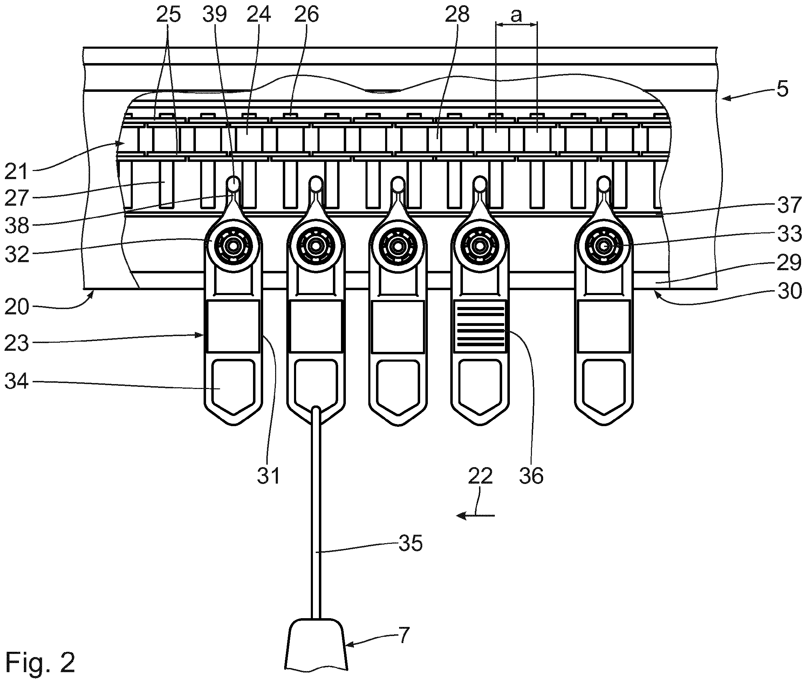

Nachfolgend wird anhand von Fig. 2 die Fördertechnik 5 näher erläutert. Die Fördertechnik 5 weist eine Transportschiene 20 auf, die mittels geeigneter Trageinrichtungen in einem Raum verlegbar ist. In der als Hohlkasten-Profil ausgebildeten Transportschiene 20 ist eine Antriebskette 21 angeordnet, die mittels nicht dargestellter Antriebsmittel entlang einer Förderrichtung 22 antreibbar ist. Weiterhin sind Halteelemente 23 vorgesehen, die mittels der Antriebskette 21 in der Transportschiene 20 bewegbar sind. Die Halteelemente 23 sind Hängeadapter.

Bei der Antriebskette 21 handelt es sich um eine sogenannte Rollen-Kette, die Rollen 24 aufweist, die in geringem Abstand voneinander mittels Verbindungslaschen 25 miteinander verbunden sind. Die Bolzen 26 weisen nach unten vorstehende, als Mitnehmer 27 dienende bolzenförmige Verlängerungen auf. Die Bolzen 26 mit den Mitnehmern 27 verlaufen normal zur Transportschiene 20 in einer durch die Förderrichtung 22 aufgespannten Vertikal-Ebene.

Die Antriebskette 21 ist in Richtung der Bolzen 26, also senkrecht und quer zur Förderrichtung 22 mittels die Verbindungslaschen 25 untergreifende Führungen 28 in der Transportschiene 20 geführt und gehalten. Der Mittenabstand a benachbarter Mitnehmer 27 in der Transportschiene 20 in der Förderrichtung 22 entspricht exakt der Teilung der Antriebskette 21 und ist insoweit unveränderbar und konstant.

An der Unterseite der Transportschiene 20 sind zwei aufeinander zu gerichtete Führungsstege 29 ausgebildet, zwischen denen ein sich in Längsrichtung der Transportschiene 20, also in Förderrichtung 22, erstreckender Schlitz 30 ausgebildet ist bzw. begrenzt wird. Durch diesen Schlitz 30 ragt ein flaches Tragteil 31 jedes Hängeadapters 23 nach unten aus der Transportschiene 20 heraus. In seinem oberen Bereich weist der Hängeadapter 23 beiderseits des Tragteils 31 je eine Laufrolle 32 auf, die sich jeweils auf einen der beiden Führungsstege 29 abstützt und hierauf in Förderrichtung 22 verschiebbar ist. Es ist also nur ein Paar von Laufrollen 32 vorhanden, die um eine gemeinsame Achse 33 drehbar sind, so dass der gesamte Hängeadapter 23 in der Transportschiene 20 um diese Achse 33 pendeln kann.

Das Tragteil 31 weist an seinem unteren Ende eine Aufnahmeöffnung 34 auf, in die die Transporttasche 7, insbesondere mit einem oberen Hakenelement 35 einhängbar ist. Zwischen der Aufnahmeöffnung 34 und der Unterseite der Transportschiene 20 ist ein Identifizierungselement 36 angeordnet, bei dem es sich um einen Transponder, insbesondere einen RFID-Chip oder einen Barcode handeln kann. Das Identifizierungselement 36 verläuft entsprechend der Anordnung des plattenartigen Tragteils 31 in Förderrichtung 22, liegt also mit seiner Hauptfläche offen quer zur Förderrichtung 22, also zur Seite hin. Es ist damit über eine nicht näher dargestellte Identifizierungseinheit möglich, das Identifizierungselement 36 eindeutig zu erfassen, da es nicht in Überdeckung mit anderen Identifizierungselementen 36 kommen kann.

Eine Transporttasche 7 mit einem zu transportierenden Artikel bleibt nach dem Einhängen in den Hängeadapter 23 während des gesamten Transportvorgangs an diesem Hängeadapter 23, ist mit diesem also gleichsam "verheiratet". Der zu transportierende Artikel wird über das Identifizierungselement 36 und damit über den Hängeadapter 23 gesteuert.

Die Transportschiene 20 weist unmittelbar oberhalb der Laufrollen 32 aufeinander zu gerichtete horizontale Begrenzungsstege 37 auf, die zwischen sich einen Schlitz begrenzen. Durch diesen Schlitz erstreckt sich ein stielartiger Ansatz 38 des Hängeadapters 23, der einstückig mit dem Tragteil 31 an dessen oberen Ende ausgebildet ist. Am oberen Ende dieses stielartigen Ansatzes 38 ist ein Anschlag 39 nach Art eines Querriegels ausgebildet, dessen Erstreckung horizontal quer zur Förderrichtung 22 größer ist als die Breite des Schlitzes, so dass bei einem Neigen des Hängeadapters 23 gegenüber der Transportschiene 20 dieser Anschlag 39 zur Anlage auf den Begrenzungsstegen 37 kommt. Somit ist eine weitere Neigung der Hängeadapter 23 verhindert. Der Ansatz 38 und der Anschlag 39 haben also die Grundform eines Hammers.

Die Mitnehmer 27 der Antriebskette 21 erstrecken sich bis unmittelbar oberhalb der Begrenzungsstege 37 so dass ein zwischen zwei Mitnehmern 27 befindlicher Hängeadapter 23 immer zuverlässig mitgenommen wird, also nicht außer Eingriff mit dem Mitnehmer 27 kommt.

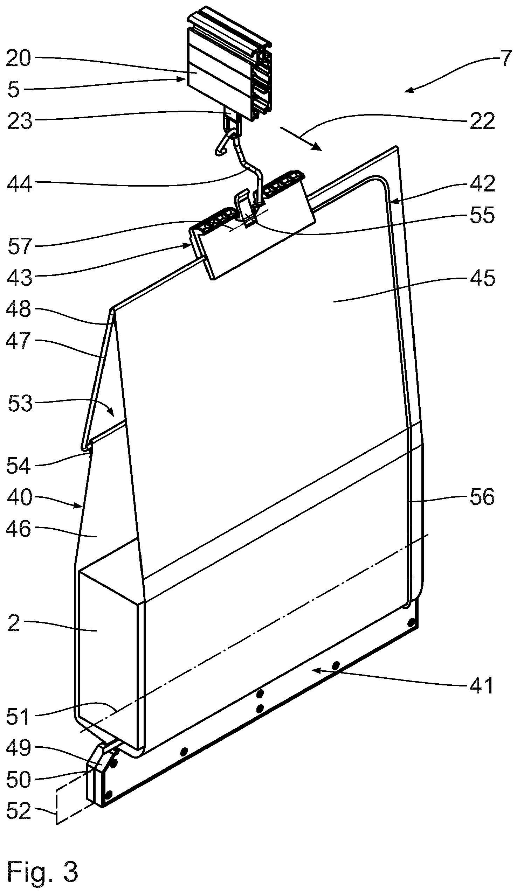

Nachfolgend wird anhand von Fig. 3 die Transporttasche 7 näher erläutert. Die Transporttasche 7 wird auch als Tragvorrichtung bezeichnet.

Die Transporttasche 7, die auch als Tragvorrichtung bezeichnet wird, weist eine Tragwand 40, eine Verschlusseinrichtung 41, eine Betätigungseinrichtung 42 und eine Aufhängeeinrichtung 43 auf. Die Betätigungseinrichtung 42 und die Aufhängeeinrichtung 43 sind Bestandteil einer Öffnungsmechanik der Transporttasche 7.

Die Aufhängeeinrichtung 43 ist an der Tragwand 40 angebracht. Die Aufhängeeinrichtung 43 umfasst einen Transporthaken 44 zum Befestigen der Tragvorrichtung 7 an dem Rolladapter 23 eines Schienensystems 5. Das Schienensystem 5 entspricht der Fördertechnik. Der Rolladapter 23 ist in einem Führungsprofil 20 des Schienensystems 5 linear verschiebbar gelagert. Das Führungsprofil 20 ist eine Transportschiene. Mittels eines nicht dargestellten Schienenantriebs kann der Rolladapter 23 zusammen mit der daran angebrachten Tragvorrichtung 7 entlang des Führungsprofils 20 automatisiert verlagert werden.

Die Tragwand 40 weist eine Vorderwand 45 und eine Rückwand 46 auf. Die Vorderwand 45 ist entlang einer Transportrichtung 22 vorne und die Rückwand 46 ist entlang der Transportrichtung 22 hinten an der Tragvorrichtung 7 angeordnet. Die Transportrichtung 22 entspricht der Förderrichtung. Die Vorderwand 45 ist über einen Beladerahmen 47 an der Aufhängeeinrichtung 43 angebracht. Hierzu weist die Vorderwand 45 an Ihrer Oberseite eine Rahmenschlaufe 48 auf. Eine Vorderseite des Beladerahmens 47 erstreckt sich durch die Rahmenschlaufe 48 der Vorderwand 45 hindurch. Eine Oberseite der Rückwand 46 ist über eine Rahmenschlaufe 54 an einer Rückseite des Beladerahmens 47 angebracht. Die Vorderwand 45 und die Rückwand 46 sind somit über den Beladerahmen 47 an der Aufhängeeinrichtung 43 angebracht.

Die Verschlusseinrichtung 41 weist eine Vorder-Schließleiste 49 und eine Hinter-Schließleiste 50 auf. Die Verschlusseinrichtung 41 weist eine parallel zu einer Längsachse 51 der Tragvorrichtung 7 orientierte Haupterstreckung auf. Die Verschlusseinrichtung 41 überragt die Tragwand 40 entlang der Längsachse 51 zu beiden Seiten. Die Unterseite der Vorderwand 45 ist an der Vorder-Schließleiste 49 angebracht. Die Unterseite der Rückwand 46 ist an der Hinter-Schließleiste 50 angebracht. Die Tragvorrichtung 7 weist eine vertikal und parallel zu der Längsachse 51 orientierte Mittelebene 52 auf.

In der Fig. 1 ist die Tragvorrichtung 7 in einem Verschlusszustand dargestellt. Eine Unterseite der Vorderwand 45 ist über die Verschlusseinrichtung 41 mit einer Unterseite der Rückwand 46 verbunden. Die Vorder-Schließleiste 49 ist hierzu an der Hinter-Schließleiste 50 befestigt und die Tragwand 40 begrenzt ein Tragvolumen 53 nach vorne, nach hinten und nach unten. Die Vorder-Schließleiste 49 kontaktiert die Hinter-Schließleiste 50 im Bereich der Mittelebene 52. Die Vorderwand 45 und die Rückwand 46 sind aus einem textilen Material und formflexibel ausgebildet. Die in dem Tragvolumen 53 angeordneten Artikel 2 befinden sich aufgrund der Schwerkraft an einer Unterseite der Tragwand 40. Aufgrund der flexiblen, insbesondere biegeweichen, Ausbildung der Tragwand 40 nimmt diese eine der Form der Artikel 2 entsprechende Form an. Die Artikel 2 werden somit fest in dem Tragvolumen 53 gehalten.

Die Betätigungseinrichtung 42 umfasst ein Betätigungsmittel 55 und ein Übertragungsmittel 56. Die Betätigungseinrichtung 42 ist zum Lösen der Verbindung zwischen der Vorder-Schließleiste 49 und der Hinter-Schließleiste 50 und damit zwischen der Vorderwand 45 und der Rückwand 46 aus dem Verschlusszustand ausgebildet.

Das Betätigungsmittel 55 ist als Betätigungshebel ausgebildet. Das Betätigungsmittel 55 ist an der Aufhängeeinrichtung 43 um eine parallel zu der Längsachse 51 orientierte Hebelachse 57 drehbar gelagert.

Das Betätigungsmittel 55 ist mit dem Übertragungsmittel 56 mechanisch gekoppelt. Die mechanische Kopplung ist dazu ausgeführt, eine entgegen der Transportrichtung 22 orientierte Betätigungskraft in eine parallel zu der Längsachse 51 orientierte Übertragungskraft zu wandeln. Das Betätigungsmittel 55 steht in kraftübertragender Verbindung mit dem Übertragungsmittel 56.

Das Übertragungsmittel 56 ist als Bowdenzug ausgebildet. Das Übertragungsmittel 56 erstreckt sich von der Aufhängeeinrichtung 43 zu der Verschlusseinrichtung 41.

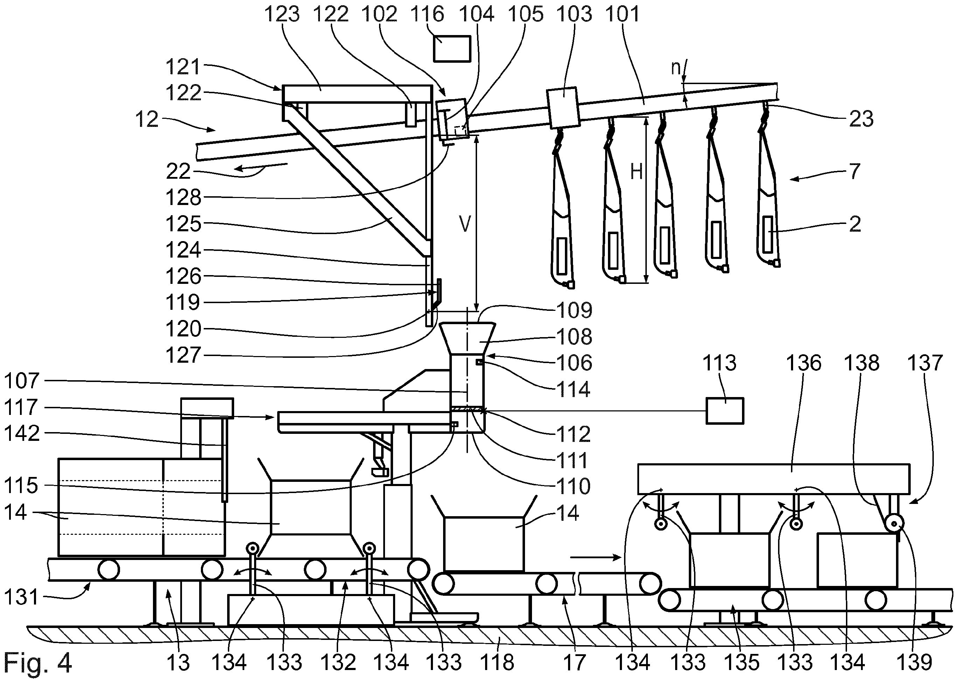

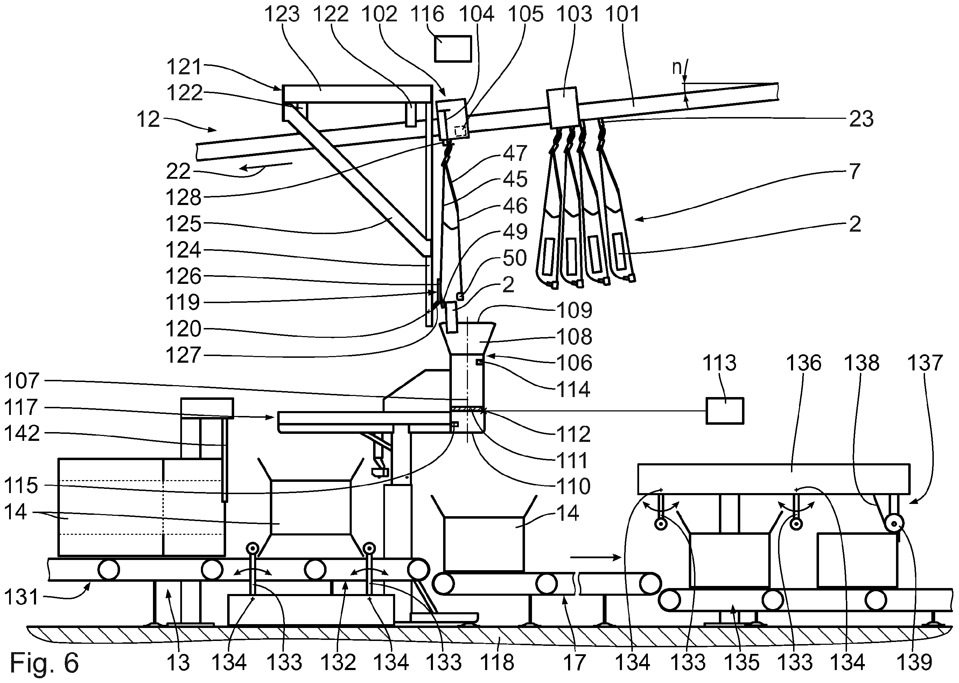

Nachfolgend werden anhand von Fig. 4 bis 9 Aufbau und Funktion der Entladestation 12 näher erläutert. Die Entladestation 12 weist eine Zuführstrecke 101 auf, die zum Zuführen der Transporttaschen 7, insbesondere mittels der Hängeadapter 23, entlang der Förderrichtung 22 in eine Entladeposition 102 dient. Die Zuführschiene 101 ist insbesondere Bestandteil der Fördertechnik 5 in der Hängeförderanlage 1.

Die Zuführschiene 101 ist entsprechend der Transportschiene 20 ausgeführt und gegenüber der Horizontalen mit einem Neigungswinkel n nach unten geneigt angeordnet. Der Neigungswinkel n beträgt insbesondere höchstens 10°, insbesondere höchstens 8°, insbesondere mindestens 1° und insbesondere mindestens 3°. Aufgrund der Neigung der Zuführstrecke 101 werden die Transporttaschen 7 mit den Hängeadaptern 23 selbsttätig infolge der Schwerkraft entlang der Förderrichtung 22 gefördert.

Zusätzlich oder alternativ zu der schwerkraftbedingten Förderung der Transporttaschen 7 infolge der Neigung der Zuführstrecke 101 kann diese einen Förderantrieb aufweisen, der beispielsweise die Antriebskette 21 umfasst.

Entlang der Zuführstrecke 101 ist bezogen auf die Förderrichtung 22 stromaufwärts der Entladeposition 102 eine Vereinzelungseinheit 103 angeordnet. Die Vereinzelungseinheit 103 ermöglicht die vereinzelte Förderung jeweils einer Transporttasche 7 in die Entladeposition 102. Die Vereinzelungseinheit 103 weist gemäß dem gezeigten Ausführungsbeispiel ein nicht separat dargestelltes Stopperelement auf, mit dem die schwerkraftbedingte Förderung der Transporttaschen 7 blockiert und gezielt wieder freigegeben werden kann.

Wenn die Zuführstrecke 101 einen Förderantrieb beispielsweise in Form der Antriebskette 21 aufweist, kann die Vereinzelungseinheit 103 auch entfallen. Ein vereinzeltes Zufördern der Transporttaschen 7 entlang der Zuführstrecke 101 kann in diesem Fall mittels des Förderantriebs erfolgen. Der Förderantrieb selbst kann in diesem Fall also eine integrierte Vereinzelungseinheit darstellen.

An der Entladeposition 102 werden die Transporttaschen 7 jeweils vereinzelt gestoppt. Analog der Vereinzelungseinheit 103 kann dazu an der Zuführstrecke 101 ein Stopperelement 104 angeordnet sein, um die schwerkraftbedingte Förderung der Transporttaschen 7 über die Entladeposition 101 hinaus zu verhindern. Das Stopperelement 104 ist eine Stoppeinheit und dient zum Stoppen der Transporttasche 7 in der Entladeposition. Wenn die Zuführstrecke 101 einen Förderantrieb aufweist, kann auf ein separates Stopperelement 104 an der Entladeposition 102 auch verzichtet werden. In diesem Fall weist der Förderantrieb ein integriertes Stopperelement auf, indem der Hängeförderadapter 23 mit der daran hängend geförderten Transporttasche 7 in der Entladeposition 102 gezielt gestoppt wird. Das Stopperelement 104 ist in Fig. 4 rein schematisch dargestellt. Insbesondere ist das Stopperelement 104 fingerartig ausgeführt und insbesondere in einer Richtung quer und insbesondere senkrecht bezüglich der Förderrichtung 22 gegenüber der Zuführstrecke 101 verlagerbar angeordnet. Insbesondere ist das Stopperelement 104 zwischen einer Stopperposition und einer Freigabeposition schaltbar verlagerbar. In der Stopperposition ist der Hängeförderadapter 23 an der Zuführstrecke 101 gestoppt. Ein schwerkraftbedingtes Weiterfördern des Hängeadapters 23 entlang der Förderrichtung 22 ist durch das Stopperelement 104 verhindert.

Durch ein Verlagern des Stopperelements 104 in die Freigabeposition wird das Stopperelement 104 zumindest anteilig vertikal nach oben, von der Zuführstrecke 101 weg verlagert und dadurch der Hängeförderadapter 23 in der Zuführstrecke 101 freigegeben.

Das Stopperelement 104 steht insbesondere mit der Steuerungseinheit 9 in Signalverbindung.

An der Entladeposition 102 ist ferner eine Öffnungseinheit 105 vorgesehen, die eine nicht näher dargestellte Auslösemechanik umfasst, um die in der Entladeposition 102 angeordnete Transporttasche 7 automatisch zu öffnen. Die Auslösemechanik weist insbesondere ein Betätigungselement 128 auf, das in Fig. 4 rein schematisch dargestellt ist. Das Betätigungselement 128 ist unterhalb der Zuführstrecke 101 angeordnet und ist insbesondere entlang der Förderrichtung 22 relativ bezüglich der Zuführstrecke 101 verlagerbar ausgeführt. Insbesondere ist das Betätigungselement 128 geeignet, die zum Auslösen der Auslösemechanik erforderliche Betätigungskraft auf das Betätigungsmittel 55 der Transporttasche 7 auszuüben. Zur Verlagerung des Betätigungselements 128 kann ein separater Antrieb, insbesondere ein Linearantrieb, vorgesehen sein.

Die Öffnungseinheit 105 ist an der Zuführstrecke 101 angeordnet und insbesondere daran befestigt.

Die Entladestation 12 weist einen Zwischenspeicher 106 auf. Der Zwischenspeicher 106 ist schachtartig ausgeführt mit einer Längsachse 107, die vertikal orientiert ist. Der Zwischenspeicher ist im Bereich der Entladeposition 102 angeordnet. Der Zwischenspeicher 106 ist vertikal beabstandet unterhalb der Zuführstrecke 101 in der Entladeposition 102 angeordnet. In einem oberen, der Zuführstrecke 101 zugewandten Bereich weist der Zwischenspeicher 106 einen Eingangstrichter 108 auf.

Der Zwischenspeicher 106 weist eine Zuführöffnung 109 auf, die an dem Zwischenspeicher 106 oben angeordnet, der Zuführstrecke 101 zugewandt ist. Der Zuführöffnung 109 gegenüberliegend ist die eine Abführöffnung 110 vorgesehen. Bezüglich der Längsachse 107 sind die Zuführöffnung 109 und die Abführöffnung 110 konzentrisch zueinander und insbesondere fluchtend angeordnet.

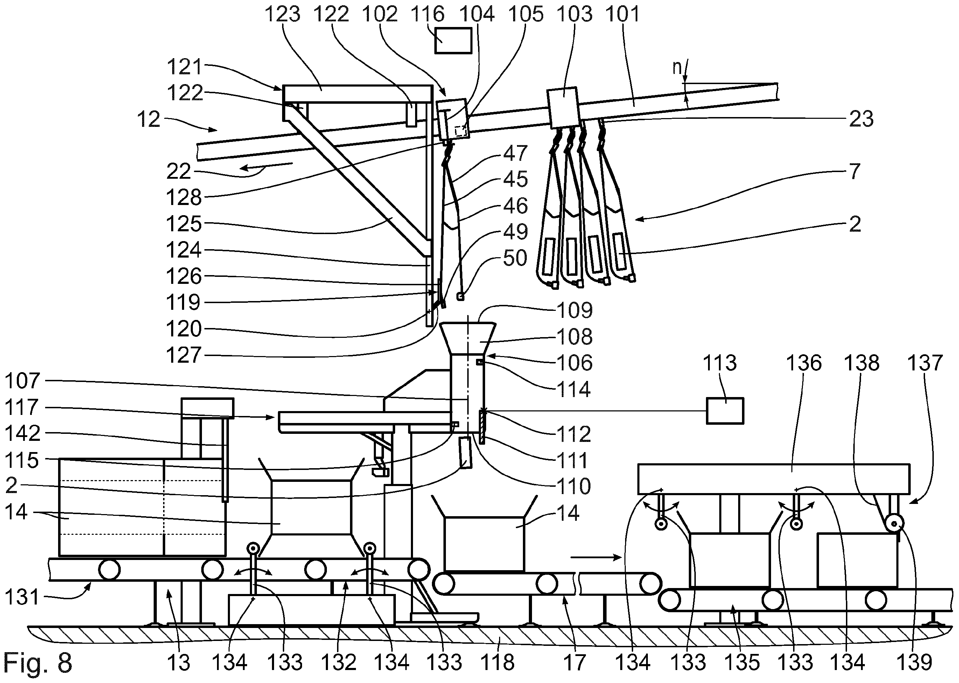

Entlang der Längsachse 107 ist in dem Zwischenspeicher 106 zwischen der Zuführöffnung 109 und der Abführöffnung 110 ein Halteelement 111 angeordnet, das um eine Schwenkachse 112 schwenkbar angeordnet ist. Das Halteelement 111 ist als Schwenkklappe ausgeführt, die mittels eines rein schematisch dargestellten Verlagerungsantriebs 113 geschwenkt werden kann. In der in Fig. 4 gezeigten Anordnung befindet sich das Halteelement 111 in einer Halteposition. In der Halteposition ist ein freier Durchgang durch den Zwischenspeicher 106 blockiert. Das Halteelement 111 ist in der Halteposition quer und insbesondere senkrecht zu der Längsachse 107 orientiert. Das Halteelement 111 kann mittels des Verlagerungsantriebs 113 in eine in Fig. 8 dargestellte Freigabeposition geschwenkt werden. In der Freigabeposition ist der Durchgang durch den Schacht des Zwischenspeicherst 106 freigegeben.

Der Zwischenspeicher 106 weist ein Zugangs-Sensorelement 114 und ein Abgangs-Sensorelement 115 auf, die jeweils einen Zugang bzw. einen Abgang jeweils seines Artikels 2 in den Zwischenspeicher 106 oder aus dem Zwischenspeicher 106 heraus quittieren. Das Zugangs-Sensorelement 114 und das Abgangs-Sensorelement 115 sind jeweils als Lichtschranke und/oder als Lichtgitter ausgeführt. Die Sensorelemente 114, 115 sind quer und insbesondere senkrecht zur Längsachse 107 orientiert. Artikel 2, die schwerkraftbedingt durch den Zwischenspeicher 6 gefördert werden, müssen zwangsläufig die Sensorelemente 114, 115 passieren.

Die Sensorelemente 114, 115 können beispielsweise an Seitenwänden des Schachts in dem Zwischenspeicher 106 integriert angeordnet sein. Es ist auch denkbar, die Sensorelemente 114, 115 außerhalb des Schachts, also unmittelbar oberhalb der oberen Zuführöffnung 109 bzw. unterhalb der unteren Abführöffnung 110 anzuordnen. Das Zugangs-Sensorelement 114 ist in vertikaler Richtung oberhalb des Halteelements 111 und das Abgangs-Sensorelement 115 unterhalb des Halteelements 111 bezogen auf die Längsachse 107 angeordnet.

Die Sensorelemente 114, 115 stehen mit der Steuereinheit 9 in Signalverbindung.

Der Zwischenspeicher 106 ist mittels einer Ständervorrichtung 117 gehalten und gegenüber dem Untergrund 118 abgestützt. Die Ständervorrichtung 117 ist im Wesentlichen tischartig ausgeführt. Die Ständervorrichtung 117 ist höhenverstellbar ausgeführt. Der Zwischenspeicher 106 ist insbesondere unabhängig von der Zuführstrecke 101 ausgeführt. Mittels der Ständervorrichtung 117 ist der Zwischenspeicher 106 relativ gegenüber der Zuführstrecke 101, sowohl entlang der Förderrichtung 22 als auch quer dazu, verlagerbar. Der Zwischenspeicher 106 kann, insbesondere mit der oberen Zuführöffnung 109 in einer gewünschten Position gegenüber der Zuführstrecke 101 insbesondere hinsichtlich der Entladeposition 102 flexibel und unkompliziert angeordnet werden.

Der Zwischenspeicher 106 ist derart an der Ständervorrichtung 117 befestigt, dass die untere Abführöffnung 110 vertikal beabstandet und oberhalb des Untergrunds 118 angeordnet ist.

Die Entladestation 12 weist eine Identifikationseinheit 116 auf, die insbesondere im Bereich der Entladeposition 102 angeordnet ist. Die Identifikationseinheit 116 dient zum Identifizieren der Transporttaschen 7, insbesondere über das an dem Hängeadapter 23 angeordnete Identifizierungselement 36. Die Identifikationseinheit 116 steht mit der Steuereinheit 9 in Signalverbindung.

Die Entladestation 12 weist ein Taschen-Stabilisierungselement 119 auf, das zum Stabilisieren der Transporttaschen 7 dient. Das Taschen-Stabilisierungselement 119 ist als Anlageleiste ausgeführt, die sich in einer Querrichtung bezüglich der Förderrichtung 22 erstreckt. Die Querrichtung ist insbesondere senkrecht bezüglich der Bildebene in Fig. 4 orientiert. Die Querrichtung ist insbesondere horizontal orientiert.

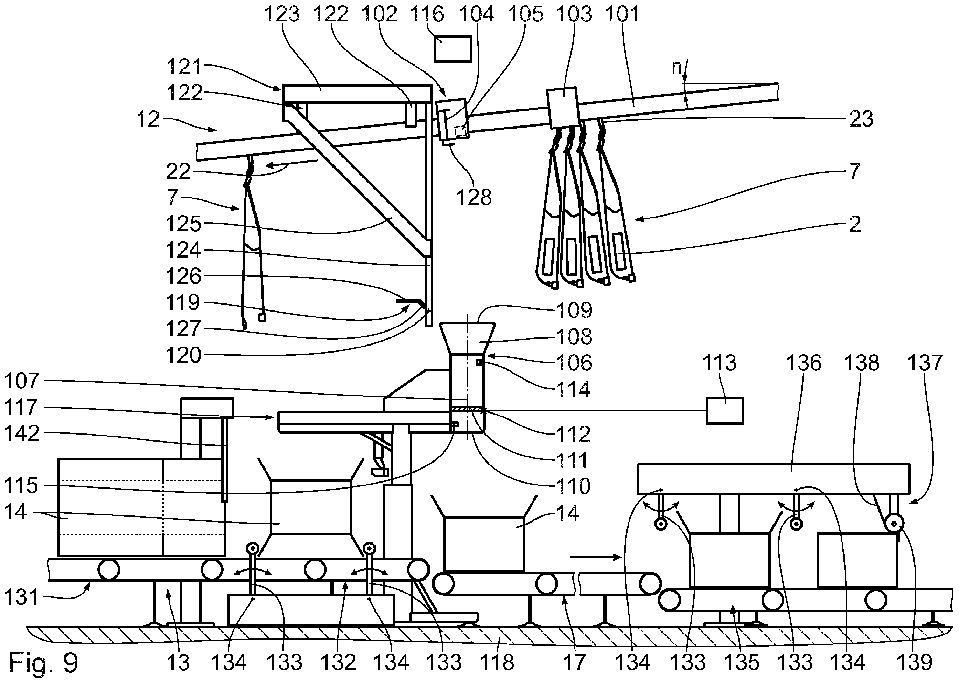

Das Taschen-Stabilisierungselement ist zwischen einer in Fig. 4 gezeigten Stabilisierungsposition und einer in Fig. 9 gezeigten Förderposition verlagerbar, insbesondere um die diesbezügliche Schwenkachse 120. Das Taschen-Stabilisierungselement 119 ist um die Schwenkachse 120 schwenkbar in einem Halterahmen 121 aufgenommen. Der Halterahmen 121 ist unmittelbar an der Zuführstrecke 101, insbesondere der Transportschiene 20 der Zuführstrecke 101 befestigt. Dazu dienen Befestigungsstege 122. Der Halterahmen 121 weist in der Seitenansicht gemäß Fig. 4 eine im Wesentlichen dreieckförmige Kontur auf. An einem oberen Horizontalträger 123 sind die Befestigungsstege 122 befestigt. Jeweils beidseitig neben der Zuführstrecke 101 ist ein Vertikalträger 121 angeordnet. Die Vertikalträger 124 sind jeweils mit dem Horizontalträger 123 fest verbunden. Die Vertikalträger 124 und der die Vertikalträger 124 verbindende Horizontalträger 123 bilden ein Portal, durch das die Zuführstrecke 101 geführt ist. Der Horizontalträger 123 und jeweils ein Vertikalträger 124 sind mittels eines Diagonalelements 125 ausgesteift. Die Schwenkachse 120 ist in den Vertikalträgern 124 gelagert. Die Schwenkachse 120 ist mit einem Vertikalabstand V unterhalb der Zuführstrecke 101 angeordnet. Der Vertikalabstand V entspricht im Wesentlichen der Höhe H der Transporttaschen 7, entlang der sich die Transporttaschen 7 vertikal nach unten aus der Zuführstrecke 101 erstrecken. Wesentlich ist, dass der Vertikalabstand V mindestens der Horizontalerstreckung H entspricht.

Die Anlegeschiene 119 ist im Wesentlichen L-förmig ausgeführt. In der Stabilisierungsposition gemäß Fig. 4 ist ein Anlegesteg 126 der Anlegeschiene 119 vertikal orientiert.

Der Anlegesteg 126 ist über einen Verbindungssteg 127 an der Schwenkachse 120 angelenkt. Der Verbindungssteg 127 erstreckt sich in der Stabilisierungsposition gemäß Fig. 4 zumindest anteilig in der Förderrichtung 22. Dadurch ist der Anlegesteg 126 an dem Halterahmen 121 in Bezug auf die Förderrichtung 22 vorstehend ausgeführt.

Stromabwärts der Entladeposition 102, also stromabwärts der Entladestation 12 geht die Zuführstrecke 101 in die Rückführstrecke 16 über, die in Fig. 4 nicht näher dargestellt ist.

Unterhalb des Zwischenspeichers 106 ist die Verpackungseinheit 13 angeordnet. Die Verpackungseinheit 13 dient zum automatischen Verpacken der Artikel 2, die über den Zwischenspeicher 106 abgegeben werden. Die Verpackungseinheit 13 stellt jeweils ein Verpackungsbehältnis 14 in einem geöffneten Zustand zur Verfügung. Das Verpackungsbehältnis 14 ist in dem gezeigten Ausführungsbeispiel durch einen geöffneten Versandkarton dargestellt.

Die Verpackungseinheit 13 umfasst einen Verpackungsbehältnis-Zuförderer 131, der gemäß dem gezeigten Ausführungsbeispiel als Förderband ausgeführt ist. Der Verpackungsbehältnis-Zuförderer 131 kann auch durch eine Rutsche oder Rinne ausgeführt sein. Mit dem Verpackungsbehältnis-Zufröderer 131 werden die Verpackungsbehältnisse 14 zugefördert. In dem gezeigten Ausführungsbeispiel werden die zusammengefalteten Versandkartons in einer vertikal aufgerichteten Anordnung transportiert.

Entlang der Förderrichtung des Verpackungsbehältnis-Zuförderers 131 ist ein Verpackungsbehältnis-Aufklappelement 142 vorgesehen, das zum Aufklappen der in der flächigen Anordnung zugeförderten Verpackungsbehältnisse 14 in eine räumliche, dreidimensionale Anordnung dient. Das Verpackungsbehältnis-Aufklappelement 142 kann beispielsweise als mindestens eine Stange und/oder Platte ausgeführt sein, die als Anschlagelement für den flächigen Versandkarton 14 dient. Mittels des Verpackungsbehältnis-Zuförderers 131 wird das flächig angeordnete Verpackungsbehälntis 14 gegen das Verpackungsbehältnis-Aufklappelement 142 gefördert. Aufgrund des Kontakts des Verpackungsbehältnisses 14 an dem Verpackungsbehältnis-Aufklappelement 142 wird das Verpackungsbehältnis 14 automatisch ausgeklappt. Um eine weitere Förderung des Versandbehältnisses 14 zu der Vorbereitungsstation 132 nicht zu blockieren, ist das Verpackungsbehältnis-Aufklappelement 142 insbesondere gegenüber dem Verpackungsbehältnis-Zuförderer 131 verlagerbar angeordnet. Dazu ist das Verpackungsbehältnis-Aufklappelement 142 an einem oberen Trägerelement gehalten und beispielsweise in einer Vertikalrichtung nach oben verfahrbar und/oder um eine im Bereich des Trägerelements angeordnete Schwenkachse schwenkbar.

Dem Verpackungsbehältnis-Zuförderer 131 schließt sich in Förderrichtung eine Vorbereitungsstation 132 an. An der Vorbereitungsstation 132 wird der aufgeklappte Versandkarton 14 an seiner Unterseite verschlossen. Dazu dienen an der Vorbereitungsstation 132 zwei entlang der Förderrichtung beabstandet zueinander angeordnete Schwenkhebel 133, die jeweils bezüglich einer unterhalb des Verpackungsbehältnis-Zuförderers 131 angeordneten Schwenkachse 134 schwenkbar sind. Die Schwenkachse 134 ist jeweils senkrecht zur Förderrichtung des Verpackungsbehältnis-Zuförderers 131 und insbesondere horizontal orientiert. Insbesondere ermöglicht die Vorbereitungsstation 132 das Zusammenklappen der Boden-Seitenwände des Verpackungskartons.

Die Vorbereitungsstation 132kann ein nicht näher dargestelltes Klebemodul aufweisen, das die nach innen geklappten Boden-Seitenwände des Verpackungskartons 14 verklebt oder in anderer Weise miteinander verbindet und damit den Verpackungskarton 14 an seiner Unterseite, mit der er auf dem Förderband abgestellt ist, insbesondere an einer dem Karton-Innenraum zugewandten Innenseite, zuverlässig verschließt.

Dem Verpackungsbehältnis-Zuförderer 131 schließt sich in Förderrichtung die Abführstrecke 17 an. Der Verpackungsbehältnis-Zuförderer 131 und die Abführstrecke 17 sind fördertechnisch voneinander entkoppelt. Insbesondere sind die Förderer 17, 131 unabhängig voneinander betätigbar. Es ist auch denkbar, zwischen den Förderern 17, 131 einen nicht angetriebenen Rollenförderer anzuordnen.

Entlang der Förderrichtung ist nach der Abführstrecke 17 eine Verpackungsbehältnis-Schließstation 135 angeordnet, die zum Verschließen der Verpackungsverhältnisse 14 dient. Im Bereich der Verpackungsbehältnis-Schließstation 135 ist ein weiterer Förderer in Form eines Förderbandes angeordnet, der unabhängig von der Abführstrecke 17 ausgeführt ist. Die Förderer 17, 135 können unabhängig voneinander betrieben werden. Insbesondere ist es möglich, in Förderrichtung zwischen den Förderern 17, 135 einen Rollenförderer anzuordnen.

Die Verpackungsbehältnis-Schließstation 135 weist entsprechend der Vorbereitungsstation 132 Schwenkhebel 133 auf, die oberhalb des Förderers an einem Querträger 136 angeordnet sind. Dadurch ist es möglich, die Deckel-seitenwände des Verpackungskartons 14 von oben zu betätigen und umzulegen. Die umgelegten Deckel-Seitenwände werden mittels eines Schließmoduls 137 verschlossen, insbesondere verklebt, indem ein Klebeband 138 mittels einer Andrückrolle 139 an der Oberseite des Verpackungskartons 14 angebracht wird. Die Andrückrolle 139 ist ebenfalls an dem Querträger 136 gehalten. Vorteilhaft ist es, wenn der Querträger 136 Höhenverstellbar bezüglich des Förderers im Bereich der Verpackungsbehältnis-Schließstation 135 angeordnet ist, um verschieden hohe Verpackungsbehältnisse 14 abarbeiten zu können.

Der Verpackungsbehältnis-Schließstation 135 kann sich eine nicht dargestellte Palettierstation anschließen, an der die Verpackungsbehältnisse 14 für den Versand palletiert, also auf Versandpaletten angeordnet und befestigt, werden.

Mittels geeigneter Komponenten, die nicht näher dargestellt und erläutert sind, kann die Verpackungseinheit 13 das Verpackungsbehältnis 14 automatisch verschließen und versandfertig machen. Das Versandbehältnis 14 ist entweder unmittelbar auf der Abführstrecke 17 angeordnet oder kann von der Verpackungseinheit 13 auf die Abführstrecke 17 abgegeben werden. Die Abführstrecke 17 ist insbesondere als Förderband ausgeführt.

Die Verpackungseinheit kann ein nicht dargestelltes Bereitstellungselement aufweisen, das insbesondere als Schwenkklappe ausgeführt ist. Das Bereitstellungselement ist bezüglich der vertikalen Richtung insbesondere unterhalb des Zwischenspeichers 106 und der Abführstrecke 17 angeordnet, insbesondere entlang einer gedachten Verbindungslinie von der unteren Abführöffnung 110 zu der Abführstrecke 17. Das Bereitstellungselement kann dazu dienen, das Verpackungsbehältnis 14 definiert und insbesondere in einer geöffneten Anordnung zur Aufnahme des Artikels 2 bereitzustellen. Das Bereitstellungselement dient insbesondere auch dazu, das Verpackungsbehältnis 14 an die Abführstrecke 17 abzugeben, nachdem die erforderlichen Artikel in dem Verpackungsbehältnis 14 angeordnet sind. Das Abgeben kann durch ein Schwenken der Schwenkklappe nach unten, also durch eine schwerkraftbedingte, selbsttätige Förderung des Verpackungsbehältnisses 14 zu der Abführstrecke 17 erfolgen. Zusätzlich oder alternativ kann ein Auswerfer vorgesehen sein, der das Verpackungsbehältnis zu der Abführstrecke 17 hin fördert.

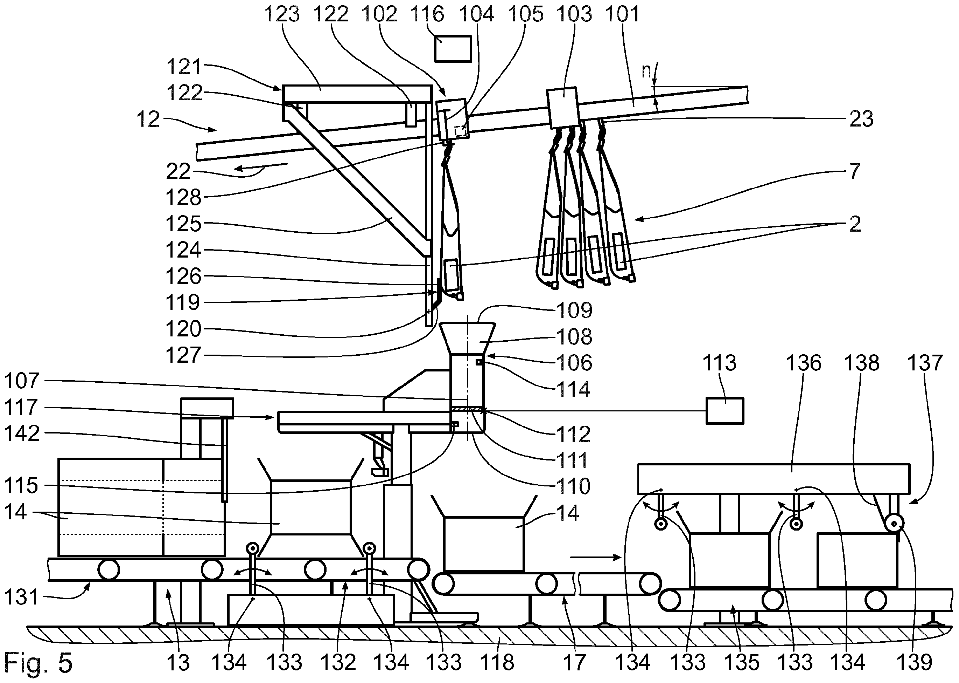

Nachfolgend wird ein Verfahren zum automatischen Entladen der Transporttaschen 7 und insbesondere zum automatischen Verpacken von Artikeln 2 näher erläutert. Ausgehend von der Situation in Fig. 4 werden die an der Zuführstrecke 101 zugeführten Transporttaschen 7, die jeweils einen Artikel 2 beinhalten, an der Vereinzelungseinheit aufgestaut. Die in Förderrichtung 22 vorderste Transporttasche 7 wird von der Vereinzelungseinheit freigegeben und mittels der Zuführstrecke 101 in die Entladeposition 102 gefördert. Dieser Zustand ist in Fig. 5 gezeigt. In der Entladeposition 102 wird die Transporttasche 7 mittels des oberen Stopperelements 104 gestoppt. An ihrer Unterseite liegt die Transporttasche 7 an dem Taschen-Stabilisierungselement 119 an. Dadurch ist verhindert, dass der Stoppvorgang der Transporttasche 7 mittels des Stopperelements 104 eine unbeabsichtigte Pendelbewegung entlang bzw. entgegen der Förderrichtung 22 bewirkt. Die Transporttasche 7 ist in der Entladeposition 102 stabil angeordnet. Insbesondere wird dieser stabile Zustand schnell, insbesondere verzögerungsfrei, erreicht.

Es ist auch möglich, auf das Stopperelement 104 zu verzichten und die Transporttasche 7 im Vorbeifahren an der Entladeposition 102 zu entladen. In diesem Fall ist auch das Taschen-Stabilisierungselement 119 entbehrlich.

Anschließend wird die Transporttasche 7 mittels der Öffnungseinheit 105 und der dort integrierten Auslösemechanik automatisch geöffnet. Dazu wirkt die Auslösemechanik mit der Öffnungsmechanik der Transporttasche 7 zusammen, indem das Betätigungselement 128 entgegen der Förderrichtung 22 verlagert wird und bei der in der Entladeposition 102 angeordneten Transporttasche das Betätigungsmittel 55 betätigt wird. Diese Betätigungskraft wird von dem Übertragungsmittel 56 auf die Schließleisten 49, 50 übertragen, so dass die beiden unteren Schließleisten 49, 50 entkoppelt werden. Schwerkraftbedingt bewegen sich die Schließleisten 49, 50 voneinander weg und geben eine untere Abgabeöffnung frei, durch die der Artikel 2 in den Zwischenspeicher 106 fallen kann. Bezüglich der Details der Öffnungseinheit 105 und der Transporttasche 7 sowie der Betätigung zum Öffnen der Transporttasche 7 mittels der Öffnungseinheit 105 wird auf DE 10 2018 201 66 A1 ausdrücklich verwiesen. Dadurch, dass der Zwischenspeicher 106 den oberen Eingangstrichter 108 aufweist, ist gewährleistet, dass der Artikel 2 zuverlässig dem Zwischenspeicher 106 zugeführt wird.

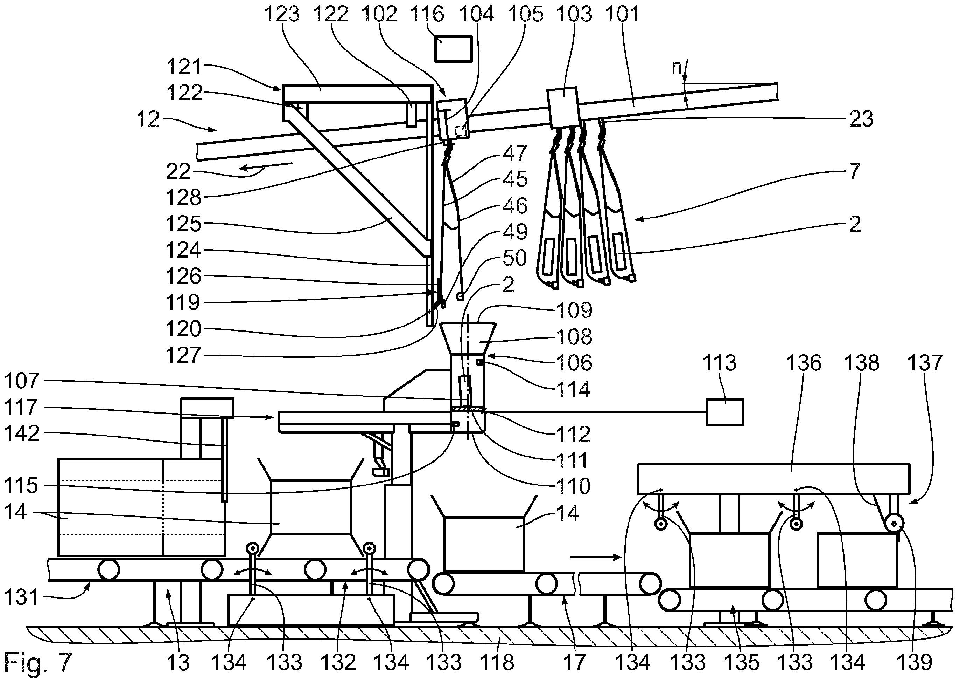

Der Artikel 2 passiert das Zugangs-Sensorelement 104. Dadurch wird erfasst, dass der Artikel in der geöffneten Transporttasche 7 in dem Zwischenspeicher 106 angekommen ist. Das Halteelement 111 befindet sich in der Halteposition. Der Artikel 2 ist durch das Halteelement 111 in dem Zwischenspeicher 106 gehalten. Diese Situation ist in Fig. 7 dargestellt. Wenn an der Verpackungseinheit 13 ein zu beladendes Verpackungsbehältnis 14 bereitsteht, wird das Halteelement 111 in die in Fig. 8 gezeigte Freigabeposition verlagert, also gemäß Fig. 8 gegenüber der Schwenkachse 112 um 90° im Gegenuhrzeigersinn gedreht bzw. geschwenkt. In der Freigabeposition gibt das Halteelement 111 den Zwischenspeicher 106 frei. Der Artikel kann schwerkraftbedingt den Zwischenspeicher 106 durch die Abführöffnung 110 verlassen und unmittelbar in das geöffnete Verpackungsbehältnis 14 fallen. Das Abgeben des Artikels 2 aus dem Zwischenspeicher 106 wird durch das Abgangs-Sensorelement 115 erfasst und ein entsprechendes Quittierungssignal an die Steuereinheit 9 übermittelt. Mittels der Verpackungseinheit 13 wird das Verpackungsbehältnis 14 geschlossen und versandfertig gemacht.

Es ist denkbar, dass mehrere einzelne Artikel 2 in ein und dasselbe Verpackungsbehältnis 14 abgegeben werden, beispielsweise wenn ein Auftrag mehrere Artikel 2 umfasst. Es ist aber auch denkbar, dass die Artikel 2 einzeln in Verpackungsbehältnisse verpackt und über die Abführstrecke 17 abgeführt werden. Nach dem automatischen Öffnen der Transporttasche 7 wird das Taschen-Stabilisierungselement 119 von der Stabilisierungsposition um 90° bezüglich der Schwenkachse 120 im Gegenuhrzeigersinn in eine Förderposition geschwenkt.

In der Förderposition ist das Taschen-Stabilisierungselement 119 derart angeordnet, dass der Anlegesteg 126 horizontal orientiert ist. In der Förderposition ist aufgrund der L-förmigen Ausgestaltung der Anlegeschiene 119 ihr Abstand zu der Zuführstrecke 101 gegenüber der Stabilisierungsposition vergrößert. Dieser vergrößerte Abstand ist insbesondere größer als die Horizontalerstreckung H der Transporttaschen 7, sodass die Transporttaschen 7 ungehindert an der sich in der Freigabeposition befindlichen Anlegeschiene 119 vorbei gefördert werden. Die geöffnete Transporttasche 7 kann, nachdem sie von dem Stopperelement 104 freigegeben worden ist, entlang der Zuführstrecke 101 weiter gefördert werden und das Taschen-Stabilisierungselement 119 passieren. Wenn die geöffnete Fördertasche das Taschen-Stabilisierungselement 119 passiert hat, wird das Taschen-Stabilisierungselement 119 entgegen der vorherigen Schwenkbewegung zurück in die Stabilisierungsposition verlagert und die nächste Fördertasche in die Entladeposition 102 gefördert, um einen neuen Entladungsvorgang zu starten.

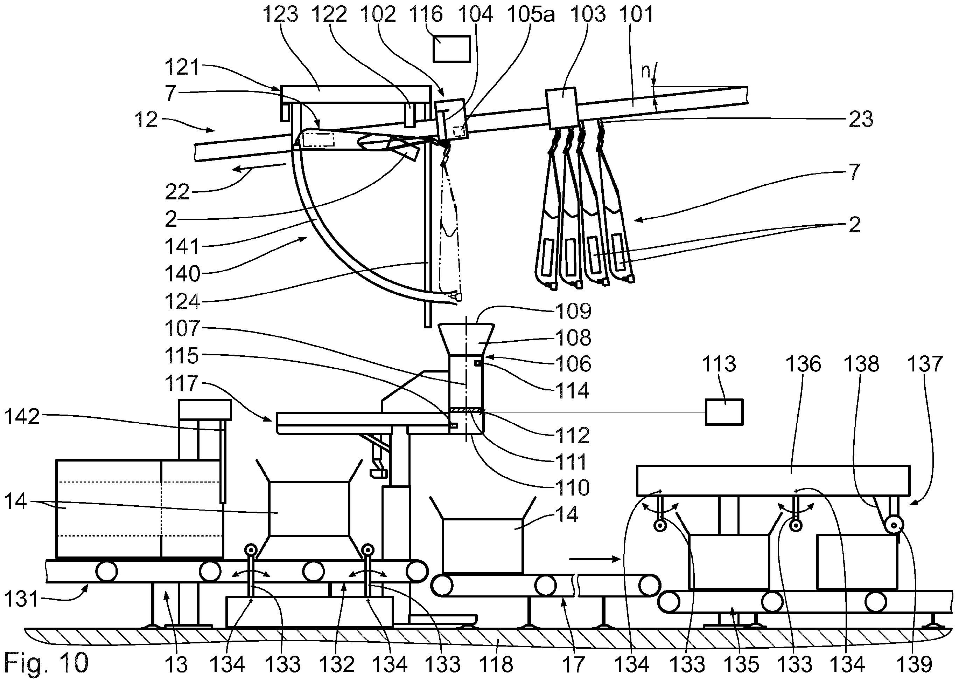

Nachfolgend wird anhand von Fig. 10 ein zweites Ausführungsbeispiel der Erfindung beschrieben. Konstruktiv identische Teile erhalten dieselben Bezugszeichen wir bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein wesentlicher Unterschied gegenüber dem ersten Ausführungsbeispiel ist die Ausgestaltung der Öffnungseinheit 105a. Mittels der Öffnungseinheit 105a werden die Transporttaschen 7 an dem Hängeadapter 23 hängend gegenüber dem Hängeadapter 23 geschwenkt. Insbesondere werden die Transporttaschen 7 soweit geschenkt, bis der Artikel 2, insbesondere durch den Beladerahmen 47 und/oder eine der seitlichen Öffnungen aus der Transporttasche 7 herausfällt. Ein Betätigen der Schließleisten gemäß dem vorherigen Ausführungsbeispiel ist dann entbehrlich. Die Öffnungseinheit 105a dient also nicht zum Öffnen der Transporttasche 7, sondern zum Auskippen des Artikels 2 aus der Transporttasche 7.

Die Öffnungseinheit 105a weist einen Schwenkmechanismus 140 auf, mittels dem die Transporttasche 7 in der Entladeposition 102 am Hängeadapter 23 schwenkbar ist. Dazu sind in einer Querrichtung senkrecht zur Förderrichtung 22 zwei beabstandet zueinander angeordnete Führungskufen 141 angeordnet und an dem Horizontalträger 123 befestigt. Von den Führungskufen 141, die in der Seitenansicht gemäß Fig. 10 im Wesentlichen viertelkreisbogenförmig ausgeführt sind, ist nur die vordergründig angeordnete Führungskufe zu sehen. Die zweite Führungskufe 141 ist in der Bildebene dahinter angeordnet und deshalb nicht sichtbar. Die Führungskufen 141 dienen zur Aufnahme der Transporttasche 7 an ihrer Unterseite, insbesondere zur Aufnahme der Schließleisten 49, 50. Insbesondere sind die Führungskufen 141 in Querrichtung derart zueinander beabstandet, dass nur die seitlich überstehenden Abschnitte der Schließleiste 49, 50 in den Führungskufen 141 aufgenommen sind.

An oder in den Führungskufen 141 kann ein nicht näher dargestellter Führungsantrieb vorgesehen sein, der die Fördertasche 7 entlang der Führungskufen 141 in Richtung der oberen Zuführschiene 101 schwenkt. Insbesondere ist ein maximaler Schwenkwinkel der Transporttasche 7 gegenüber dem Hängeadapter 23 größer als 90°, insbesondere mindestens 95° und insbesondere mindestens 100°, um eine zuverlässige Abgabe des Artikels 2 aus der Transporttasche 7 infolge der Schwerkraft zu gewährleisten.

Die Öffnungseinheit 105a ermöglicht eine vereinfachte Abgabe der Artikel 2 aus den Transporttaschen 7. Insbesondere ist ein Öffnen und späteres Schließen der Transporttaschen 7 infolge des Auskippens entbehrlich.

## Patentansprüche

1. Verfahren zum automatischen Entladen einer hängend geförderten Transporttasche umfassend die Verfahrensschritte
- Zuführen der Transporttasche (7) in eine Entladeposition (102) mittels einer Zuführstrecke (101),
- Entladen der Transporttasche (7) in der Entladeposition (102) mittels einer Entladeeinheit (105),
- automatisiertes Abgeben eines aus der Transporttasche (7) entladenen Artikels (2),
- Aufnehmen des entladenen Artikels (2) in einem Zwischenspeicher (106),
- Zwischenspeichern des Artikels (2) in dem Zwischenspeicher (106),
- Abgeben des Artikels (2) aus dem Zwischenspeicher (106).

2. Verfahren gemäß Anspruch 1, **dadurch gekennzeichnet, dass** das Zwischenspeichern ein Halten des aus der Transporttasche (7) abgegebenen Artikels (2) mittels eines Halteelements (111) des Zwischenspeichers (106) umfasst, wobei insbesondere das Halteelement (111) zwischen einer Halteposition, in der der Artikel (2) gehalten ist, und einer Freigabeposition, in der der Artikel (2) freigegeben ist, verlagerbar ist.

3. Verfahren gemäß einem der vorstehenden Ansprüche, **gekennzeichnet durch** Quittieren des Zugangs des Artikels (2) in den Zwischenspeicher (106) mittels eines Zugangs-Sensorelements (114) des Zwischenspeichers und/oder Quittieren des Abgangs des Artikels (2) aus dem Zwischenspeicher (106) mittels eines Abgangs-Sensorelements (115) des Zwischenspeichers (106).

4. Verfahren gemäß einem der vorstehenden Ansprüche, **dadurch gekennzeichnet, dass** die Transporttasche (7), insbesondere der in der Transporttasche (7) geförderte Artikel (2), vor dem Zuführen in die Entladeposition (102) mittels einer Identifikationseinheit (116) identifiziert worden ist und insbesondere diese Information an eine Steuerungseinheit (9) übermittelt worden ist.

5. Vorrichtung zum automatischen Entladen einer hängend geförderten Transporttasche (7), wobei die Vorrichtung (12) aufweist
a. eine Zuführstrecke (101) zum Zuführen der Transporttasche (7) in eine Entladeposition (102),
b. eine Entladeeinheit (105) zum automatischen Entladen der Transporttasche (7) in der Entladeposition (102).

6. Vorrichtung gemäß Anspruch 5, **dadurch gekennzeichnet, dass** die Zuführstrecke (101) einen Förderantrieb (21) umfasst.

7. Vorrichtung gemäß einem der Ansprüche 5 bis 6, **gekennzeichnet, durch** eine Identifikationseinheit (116) zum Identifizieren der Transporttasche (7), insbesondere des in der Transporttasche (7) angeordneten Artikels (2).

8. Vorrichtung gemäß einem der Ansprüche 5 bis 7, **dadurch gekennzeichnet, dass** die Entladeeinheit eine Öffnungseinheit (105) ist, die eine Auslösemechanik zum Auslösen eines Schließmechanismus der Transporttasche (7) aufweist.

9. Vorrichtung gemäß einem der Ansprüche 5 bis 8, **gekennzeichnet durch** einen Zwischenspeicher (106) zum Aufnehmen eines aus der geöffneten Transporttasche (7) abgegebenen Artikels (2) und zum Abgeben des Artikels (2) an eine Verpackungseinheit (13).

10. Vorrichtung gemäß Anspruch 9, **dadurch gekennzeichnet, dass** der Zwischenspeicher (106) ein Halteelement (111) aufweist zum Halten des aus der Transporttasche (7) abgegebenen Artikels (2), wobei insbesondere das Halteelement (111) zwischen einer Halteposition, in der der Artikel (2) gehalten ist, und einer Freigabeposition, in der der Artikel (2) zur Weiterförderung freigegeben ist, verlagerbar ist.

11. Vorrichtung gemäß Anspruch 9 oder 10, **dadurch gekennzeichnet, dass** der Zwischenspeicher (106) ein Zugangs-Sensorelement (114) zum Quittieren des Zugangs des Artikels (2) in den Zwischenspeicher (106) und/oder ein Abgangs-Sensorelement (115) aufweist zum Quittieren des Abgangs des Artikels (2) aus dem Zwischenspeicher (106) aufweist.

12. Vorrichtung gemäß einem der Ansprüche 9 bis 11, **dadurch gekennzeichnet, dass** der Zwischenspeicher (106) in vertikaler Richtung unterhalb der Entladeposition (102) angeordnet ist.

13. Vorrichtung gemäß einem der Ansprüche 5 bis 12, **gekennzeichnet durch** ein Taschen-Stabilisierungselement (119) zum Stabilisieren der Transporttasche (7) in der Entladeposition (102).

14. Vorrichtung gemäß einem der Ansprüche 5 bis 13, **gekennzeichnet durch** eine, insbesondere automatische, Verpackungseinheit (13) zum Verpacken des Artikels in einem Verpackungsbehältnis (14), wobei insbesondere die Verpackungseinheit (13) in vertikaler Richtung unterhalb des Zwischenspeichers (106) angeordnet ist, wobei insbesondere eine Abführstrecke (17) zum Abführen des Verpackungsbehältnisses (14) von der Verpackungseinheit (13) vorgesehen ist.

15. Hängeförderanlage zum hängenden Fördern von Transporttaschen (7) umfassend mindestens eine Vorrichtung (12) gemäß einem der Ansprüche 5 bis 14.
